# EUROPEAN PATENT APPLICATION

(11) **EP 4 206 364 A1**
(43) Date of publication of application: **05.07.2023**
(21) Application number: 22150033.3
(22) Date of filing: 03.01.2022
(51) Int. Cl.: C25D 17/00, C25D 17/06

(54) **DEVICE FOR GRIPPING A WORKPIECE, METHOD OF MANUFACTURING THE DEVICE, AND CONVEYING SYSTEM AND APPARATUS FOR ELECTROCHEMICAL SURFACE TREATMENT COMPRISING AT LEAST ONE SUCH DEVICE**

(71) Applicant: Atotech Deutschland GmbH & Co. KG, 10553 Berlin (DE)
(72) Inventor: Wiener, Ferdinand, 10553 Berlin (DE); Bachmann, Falk, 10553 Berlin (DE); Schirmer, Christian, 10553 Berlin (DE); Strobel, Johannes, 10553 Berlin (DE); Reiser, Björn, 10553 Berlin (DE); Brüggmann, Horst, 10553 Berlin (DE); Scheller, Britta, 10553 Berlin (DE)
(74) Representative: Atotech Deutschland GmbH & Co. KG

(57) **Abstract**

A device for gripping a workpiece (2) and electrically contacting at least one surface of the workpiece (2) comprises a first member (9;44;82;120;155) extending between a first end (12;47;85;123;158) and a second end (13;48;86;124;159) and a second member (8;43;81;119;154) extending between a first end (10;45;83;121;156) and a second end (11;46;84;122;157) and movably journalled with respect to the first member (9;44;82;120;155) to allow the workpiece (2) to be inserted between the respective first ends (10,12;45,47;83,85;121,123;156,158) and held between the first and second members (8,9;43,44;81,82;119,120;154,155) at respective clamping locations that are closer to the first ends (10,12;45,47;83,85;121,123;156,158) than to the second ends (11,13;46,48;84,86;122,124;157,159) along the extents of the first and second members (8,9;43,44;81,82;119,120;154,155). Each of the first and second members (8,9;43,44;81,82;119,120;154,155) comprises at least a section located between the clamping location and the second end (11,13;46,48;84,86;122,124;157,159) along the extent of that member (8,9;43,44;81,82;119,120;154,155). At least one of the first and second members (8,9;43,44;81,82;119,120;154,155) is electrically conducting and provided with a contact region at the clamping location for contacting a surface of the workpiece (2), the contact region comprising at least one exposed surface (25,30;63,68;100,105;137;142;173,178) facing towards the other of the first and second members (8,9;43,44;81,82;119,120;154,155). The device comprises at least one shielding
part (17,32-35,38-40;70-72,75-78;93a,b,94,107-109,112-114;131,144-147,149 ,150;166a,b,167,180-182,185-187), obtainable independently of the first and second members (8,9;43,44;81,82;119,120;154,155) and made of material with a lower electrical conductivity than electrically conducting material of the electrically conducting member(s) (8,9;43,44;81,82;119,120;154,155). At least the section located between the clamping location and the second end (11,13;46,48;84,86;122,124;157,159) of each of those of the first and second members (8,9;43,44;81,82;119,120;154,155) that are electrically conducting is shielded on a side of that member (8,9;43,44;81,82;119,120;154,155) that faces the other of the first and second members (8,9;43,44;81,82;119,120;154,155) by at least one of the shielding
parts (17,32-35,38-40;70-72,75-78;93a,b,94,107-109,112-114;131,144-147,14 9,150;166a,b,167,180-182,185-187). Shielding
parts (17,33,34,39,40;71,77,78;93a,b,94,108,113;131,145,146,150;166a,b,167 ,181,186) that section of any of the first and second members (8,9;43,44;81,82;119,120;154,155) on a side of that member that faces the other of the first and second members (8,9;43,44;81,82;119,120;154,155) border a gap through which liquid can flow between the first and second members (8,9;43,44;81,82;119,120;154,155).

## Description

### Technical Field

The invention relates to a device for gripping a workpiece and electrically contacting at least one surface of the workpiece, which device comprises:
a first member extending between a first end and a second end;
a second member extending between a first end and a second end and movably journalled with respect to the first member to allow the workpiece to be inserted between the respective first ends and held between the first and second members at respective clamping locations that are closer to the first ends than to the second ends along the extents of the first and second members,
wherein each of the first and second members comprises at least a section located between the clamping location and the second end along the extent of that member, and
wherein at least one of the first and second members is electrically conducting and provided with a contact region at the clamping location for contacting a surface of the workpiece, the contact region comprising at least one exposed surface facing towards the other of the first and second members; and
at least one shielding part, obtainable independently of the first and second members and made of material with a lower electrical conductivity than electrically conducting material of the electrically conducting member(s).

The invention also relates to a conveying system.

The invention also relates to an apparatus for electrochemical surface treatment of a workpiece.

The invention also relates to a method of manufacturing a device of the above-mentioned kind.

### Background Art

US 2007/0039816 A1 discloses an electrical supply unit for material to be treated in a device for the electrochemical treatment thereof. The material to be treated is held, and electrical contact is made with it, by a clamp which is formed by a clamp upper part and a clamp lower part, respectively consisting of a blank material with a good conductivity. At a front end of the clamp upper part and of the clamp lower part, contact means or contact elements are respectively connected electrically conductively to the clamp upper and lower parts in a conducting fashion. The material to be treated is engaged between these contact elements. Starting from the contact element, a shell part which encloses the clamp lower part at a small distance from is fastened to the latter. The shell part is designed so that it extends at least to above the liquid level of an electrolyte in an electrochemical treatment device. The shell part prevents metal ions migrating back from the electrolyte surrounding the camp lower part to an outer side of the clamp lower part and this simultaneously leads to screening of electric field lines formed between an anode and the material to be treated. In the example, the shell part is open on the side facing the clamp upper part, but is disclosed that a closed design which fully surrounds the clamp lower part is also possible. In a similar way a further shell part is fastened to the clamp upper part and bears tightly on the clamp upper part at least on the outer side, in order to minimise any possible accumulation between the shell part and the clamp upper part. The shell part fastened to the clamp upper part, like the shell part fastened to the clamp lower part, is open in the region which faces the clamp lower part. When the clamp formed by the clamp upper part and the clamp lower part opens and closes, glide surfaces formed at contact points of the shell parts glide firmly against each other so that good electrical insulation, a liquid seal which prevents the metal ions from migrating back, as well as good screening of the electrical field lines are ensured in this case as well. The shell parts thus form a shell which encloses the clamp upper part and the clamp lower part, starting from the contact elements, so as to substantially prevent metal ions migrating back from the electrolyte found outside the shell.

Thus, one shell encases both the clamp upper part and the clamp lower part, which are J-shaped. Seen from the side, the shell bears some resemblance to a Wellington boot in which both the clamp upper part and the clamp lower part have been inserted.

A region with a substantially lower concentration of metal ions, such as is present in the interior of the shielding of the known device, results in a region of relatively high electrical resistance and thus a deformation of the electrical field. It is difficult to compensate for this in order to maintain a uniform treatment across the contacted surface of the workpiece in the region of the clamp.

### Summary of Invention

It is an object of the invention to provide a device, conveying system, apparatus and method of the types mentioned above in the opening paragraphs that allow for more uniform surface treatment in the edge regions of the workpiece where the device grips the workpiece.

This object is achieved according to a first aspect by the device according to the invention, which is characterised in that at least the section located between the clamping location and the second end of each of those of the first and second members that are electrically conducting is shielded on a side of that member that faces the other of the first and second members by at least one of the shielding parts, and shielding parts shielding that section of any of the first and second members on a side of that member that faces the other of the first and second members border a gap through which liquid can flow between the first and second members.

The device is for use in a conveying system for an apparatus for electrochemical surface treatment of a workpiece, in particular wet-electrochemical surface treatment. Examples include electroplating and etching, i.e. building up or breaking down an electrically conducting layer of material on a surface of the workpiece.

The first and second members may be elongated members, so that they extend in longitudinal direction between the first and second ends. The first and second members need not be straight, however. The clamping locations are locations along the extent (e.g. length) of the first and second members where the workpiece is directly or indirectly held by the first and second members. These clamping locations may coincide with the locations of the first ends or be close to the first ends. The relative movement of the first and second members is a pincer movement that may be a linear movement, a pivoting movement or a combination of the two.

The device is arranged to grip a planar workpiece at a location close to a lateral edge of the workpiece with respect to a direction of movement of the workpiece through the processing apparatus comprising the gripping device. Depending on the shape of the device, the device may be suitable for incorporation into a horizontal or a vertical conveying system for conveying the workpiece through the processing apparatus.

In use, the first end and the section located between the clamping location and the second end of the member along the extent of the member are submerged in liquid electrolyte in a bath of an apparatus for electrochemical surface treatment of the workpiece. There is a gap between that section of the first member and that section of the second member, even when the first and second members contact each other at the clamping locations. In the configuration in which the workpiece is held between the first and second members, there may be a gap between each member and the workpiece. Because of the gap through which liquid can flow, the electrolyte can enter the space between the first and second members continually. There is relatively little resistance to flow, so that there are relatively small or no concentration gradients. This results in relatively uniform surface treatment around the area of contact between the device and the workpiece.

At least one of the first and second members is electrically conducting, depending on whether only one or both opposing surfaces of the workpiece require surface treatment. The electrically conducting member or members may be made completely of electrically conducting material or comprise a non-conducting core. At least the exposed surface is a formed by electrically conducting material. Because this surface or these surfaces is or are exposed, they can be applied to the workpiece to establish an electrical connection. The member is provided with an electrical contact point at a location distal to the first end for connecting a lead to a current supply, or to a connector of the current supply, arranged to establish a voltage differential between the member and a counter-electrode of the processing apparatus. The electrically conducting material may be titanium or an alloy comprising titanium, for example. Titanium is chemically stable, not too expensive and a reasonably good electrical conductor.

The at least one shielding parts are separate from the first and second members. They are distinguished from insulating coatings by the fact that they are obtainable independently of the first and second members, e.g. as self-supporting structures. They will generally be connected mechanically to at least one of the first and second members, but may be joined thereto by adhesive bonding or the like. In any case, and in contrast to coatings, they can be made of a material that does not adhere particularly well to the surface material of those of the first and second members that are electrically conducting. This opens up a relatively wide range of choice of materials. In addition, the coefficients of thermal expansion may differ by more than might be the case for a coating applied directly to the first or second member. Some of the shielding parts may be fixed directly to an electrically conducting one of the first and second members. Some may be interconnected to form a shell encasing the electrically conducting one of the first and second members, or a section thereof, but not fixed directly to that member. One or more of the shielding parts may be provided between the first and second members, so long as there is a gap between lateral edges or shielded lateral edges, as the case may be, of the first and second members, through which liquid can flow between the first and second members. Because the facing surfaces of the first and second members, when electrically conducting, are shielded, there is less or no deposition or breakdown at the surface of the electrically conducting member concerned. Furthermore, the electrically conducting member does not distort the electrical field to such a significant degree. The shielding parts need not all be made of the same material. Suitable materials include polymer materials. Examples include polysulfone (PSU) and polypropylene. The latter material is suitable for additive manufacturing using extrusion printing or fusion printing and not too expensive.

In an embodiment, the shielded section located between the clamping location and the second end extends to the clamping location.

The shielded section, the clamping location and the term extend refer to the direction along the extent of the member between the first and the second end, i.e. the longitudinal direction in the case of an elongate member. The section may be interrupted in a direction transverse to the direction in which the section extends, e.g. by an aperture through the member. Because the section extends to the clamping location, it is possible to provide a gap between the surface of the shielding device or devices adjacent the exposed surface and the surface of the workpiece. This gap allows electrolyte to flow between the surface of the shielding device or devices and the surface of the workpiece, so that a region between the edge of the workpiece and the area of contact between the device and the workpiece can be treated. It follows that the area of contact can be further away from the edge towards the middle of the workpiece. This is of use in certain types of processing, where the workpiece is successively gripped by different gripping devices according to the invention. These can be configured such that each next gripping device contacts the workpiece further away from the edge of the workpiece. The surface treatment extends relatively uniformly to the edge of the workpiece.

In an embodiment, at least one of the first and second members has a basic shape in the form of a strip.

A strip is an elongated narrow bar. The width need not be constant along the length of the bar, however. The thickness need not be constant across the width, with the bar having rounded or chamfered edges, for example. The bar may be bent or curved with a radius of curvature in a plane transverse to the major surfaces of the strip. These major surfaces may be flat over at least part of the extent of the member. Such flat surface sections are useful for supporting parts attached to the member. The strip-shape also allows for an area of contact with the surface of the workpiece that runs over a relatively long distance parallel to the edge of the workpiece, corresponding to the conveying direction of the workpiece through the apparatus for surface treatment comprising the gripping device. This can help avoid buckling of thin planar workpieces.

In an embodiment, the first and second members are each provided with a bend at a position closer to the first end than to the second end along their extent.

The first and second members thus comprise a relatively long section from the second end to the bend and a relatively short section from the bend to the first end. This embodiment is useful when the device is for use in a horizontal conveying system for conveying planar workpieces. The relatively short section will be submerged in the liquid electrolyte. The relatively long section will extend at an angle to the relatively short section. The relatively long section will be only partly submerged in the liquid electrolyte, in use. Shielding parts need only be provided to the extent that the relatively long section is submerged, in use. The electrolyte bath can be relatively narrow or the workpiece relatively wide in relation to the electrolyte bath. In a particular embodiment, the first and second member may be approximately L-shaped or J-shaped, seen in plan view in a direction corresponding to a conveying direction of the workpiece, in use.

In an embodiment of the device, at least one of the first and second members is provided with a liquid-permeable window through that member in the section located between the clamping location and the second end along the extent of that member.

This allows for a relatively large amount of liquid electrolyte to flow between the first and second members as the device is moved through the electrolyte liquid. Uniformity of surface treatment is enhanced.

In an embodiment in which the first and second members are each provided with a bend at a position closer to the first end than to the second end along their extent and at least one of the first and second members is provided with a liquid-permeable window through that member in the section located between the clamping location and the second end along the extent of that member, at least part of the window is located between the bend and the clamping location.

This specifically allows the liquid electrolyte to reach the surface of the workpiece in the region between the lateral edge of that surface and the area of contact with the device. Thus, relatively uniform surface treatment is achievable, the only singularity being where the exposed surface contacts the workpiece surface.

In any embodiment in which the first and second members are each provided with a bend at a position closer to the first end than to the second end along their extent and at least one of the first and second members is provided with a liquid-permeable window through that member in the section located between the clamping location and the second end along the extent of that member, at least part of the window is located in the bend.

The liquid electrolyte can thus flow into the space between the first and second members in two directions. One direction is parallel to the section of the member extending between the bend and the first end. This corresponds to a direction parallel to the workpiece surface. The other direction is transverse thereto.

In an example of any embodiment of the device in which at least one of the first and second members is provided with a liquid-permeable window through that member in the section located between the clamping location and the second end along the extent of that member, the window is formed by an aperture through the member, at least one shielding part comprises a section extending into the aperture at an edge of the aperture, and the section(s) extending into the aperture cover the edge of the aperture.

The same shielding device may in particular cover a surface section around the aperture and be turned into the aperture to cover the edge. Without the shielding, the edge of the aperture would form a sharp exposed electrically conducting part of the member, distorting the uniformity of the electric field. With the section(s), the shielding part or parts frame the liquid-permeable window and leave no electrically conducting edges exposed.

In an embodiment of the device, the first and second members are guided for linear relative movement towards and away from each other in a plane in which they extend.

Thus, the parts of the first member and second member that contact the surfaces of the workpiece can be moved towards the surfaces in a straight line perpendicular to the surface. In an embodiment in which the first and second members are each provided with a bend at a position closer to the first end than to the second end along their extent, the plane corresponds to the plane in which the short and long sections on either side of the bend lie. The direction of movement is transverse to the direction in which the short sections of the first and second members extend from the respective bend to the respective first end.

In an embodiment of the device, the first and second members are interconnected by at least one guide movably journalling the first and second members with respect to each other, e.g. a linear guide.

This means that only one of the first and second members need be mounted to mount the device. The guide connects the other and thus performs two functions, namely guiding relative movement and holding the first and second members together.

In a particular example of this embodiment, at least a sub-set of parts forming at least one of the guides is shielded by at least one of the shielding parts.

These parts forming at least one of the guides can thus be made of metal and there need be no electrically insulating parts interposed between the guide and those of the first and second members that are electrically conducting.

In an example of any embodiment in which the first and second members are interconnected by at least one guide movably journalling the first and second members with respect to each other, e.g. a linear guide, at least a sub-set of the parts forming at least one of the guides is made of material with a lower electrical conductivity than electrically conducting material of the electrically conducting member(s).

These parts forming the guide may correspond to respective ones of the shielding parts. When fixed to an electrically conducting one of the first and second members, the guide part shields that member and no further shielding part is required for that location.

In an embodiment of the device, at least one of those of the first and second members that are electrically conducting is shielded by at least two interlocking shielding parts.

These shielding parts may thus be fastened to each other by joints that can be opened and closed. Fastening mechanisms include snap fits (a lug connected to a body of the shielding part concerned by a cantilever, with the lug engaging a recess in another of the shielding parts). Interlocking may also be achieved by merely sliding complementary shaped parts of the shielding parts into engagement. The number of fasteners required to connect the shielding parts to one or more of the first and second members is reduced, or such fasteners may even be dispensed with. For example, the interlocking shielding parts may interlock to form an assembly having an interior shape complementary to a section of the member that the assembly encases. In such an embodiment, a shape-lock is provided between the assembly and the member concerned. No separate fasteners are required, because the shape-lock holds the assembly in position. Where the shielding parts are made of polymer material, inlays for fasteners can be dispensed with.

In an embodiment, the at least one exposed surface is formed at a distal end of a respective raised part projecting with respect to adjacent surface sections of the electrically conducting member.

Thus, a well-defined limited area of electrical and physical contact with the surface of the workpiece is defined.

In a particular example of this embodiment, at least one of the shielding parts shields the adjacent surface sections.

Current is thus forced to flow along the surface of the workpiece and into the electrically conducting member through the raised part.

In a particular version of this example, the raised part(s) protrude with respect to at least the shielding part(s) extending from the raised part(s) towards the second end.

Thus, when the at least one exposed surface is brought into contact with the workpiece surface, the shielding part(s) covering the surface of the member around the raised part remain at a distance to the workpiece surface. There is a gap through which electrolyte liquid can flow. Only that section of the workpiece surface corresponding to the area of contact with the exposed surface(s) of the electrically conducting member is left untreated.

In an example of any embodiment of the device in which the at least one exposed surface is formed at a distal end of a respective raised part projecting with respect to adjacent surface sections of the electrically conducting member, any surface section defined by those shielding parts forming a section from a base of the raised part towards the second end along the extent of at least one of those of the first and second members that are electrically conducting that faces in a direction of the other of the first and second members is set back with respect to the exposed surface formed at the distal end of the raised part.

When the exposed surface contacts the surface of the (essentially planar) workpiece, the gap between that surface and the surfaces of those shielding parts forming a section from a base of the raised part towards the second end along the extent of the member concerned is automatically established. Liquid electrolyte can flow through this gap unhindered. Ion concentration gradients in the liquid electrolyte are reduced or avoided. A comparable level of surface treatment is achieved on either side of the exposed surface, i.e. the area of contact with the workpiece surface.

In an example of any embodiment in which the at least one exposed surface is formed at a distal end of a respective raised part projecting with respect to adjacent surface sections of the electrically conducting member, the raised part forms a ridge, e.g. a ridge extending in a direction transverse to the extent of the electrically conducting member and a plane of relative movement of the first and second members.

The ridge in effect defines a line of contact with the surface of the workpiece, the line extending substantially parallel to the direction of movement of the workpiece in a conveying system comprising the gripping device. An effect is that the workpiece surface potential decreases from the lateral edge to the middle of the workpiece, i.e. in a direction transverse to the direction of movement of the workpiece, but is relatively invariant in a direction parallel to the direction of movement. It is noted that, where the first and second members are each provided with a bend at a position closer to the first end than to the second end along their extent, the plane of relative movement will generally correspond to the plane in which both the short section of the member from the bend to the first end and the longer section of the member from the bend to the second end lie. Where the members are strip-shaped, the plane is transverse to the plane of the strip.

According to another aspect, the conveying system according to the invention for conveying a workpiece through an apparatus for electrochemical processing comprises:
at least one, e.g. a plurality, of devices according to the invention; and
a driving device for driving movement of the at least one device along a path through the apparatus in a state in which the device holds the workpiece,
wherein the system is arranged to cause relative movement of at least sections of the first and second members comprising the clamping locations at a start of the path and at an end of the path to grip and release the workpiece respectively.

The or each device may comprise an actuator, e.g. an electrical, electromagnet, hydraulic or pneumatic actuator for or in each of the devices to cause the relative movement, for example. The driving device may comprise a chain or belt conveyor to which the device or devices are fixed. The movement of the device or devices for gripping the workpiece brought about by the driving device causes liquid electrolyte to flow between the first and second members where they are submerged in the liquid electrolyte.

In an embodiment of the conveying system, each device comprises a biasing device for exerting a force urging at least the sections of the first and second members comprising the clamping locations towards or away from each other, and the system further comprises:
a first cam for engaging the device at the start of the path to cause the sections of the first and second members comprising the clamping locations to move apart or towards each other against the force exerted by the biasing device when the device is moved along the first cam by the driving device; and
a second cam at the end of the path to cause the sections of the first and second members comprising the clamping locations to move apart or towards each other against the force exerted by the biasing device when the device is moved along the second cam by the driving device.

Thus, the gripping devices can be relatively lightweight and simple, as they do not need to comprise individual actuators. The workpiece is automatically gripped at the start of the path and released at the end of the path as the gripping device is conveyed along the path.

According to another aspect, the apparatus according to the invention for electrochemical surface treatment of workpieces comprises:
a conveying system according to the invention;
at least one processing bath comprising at least one counter-electrode; and
at least one current supply connected to at least one of those of the first and second members of the clamping devices that are electrically conducting to establish a voltage differential between the connected member(s) and at least one of the at least one counter-electrodes.

Where the workpieces are gripped at opposite lateral edges with respect to a direction of movement through the apparatus, the apparatus will comprise two conveying systems according to the invention. The counter-electrode or electrodes form counter-electrodes to the workpiece, which acts as an electrode by virtue of being electrically contacted by the gripping devices.

According to another aspect, in the method according to the invention of manufacturing a device according to the invention, at least one of the shielding parts is obtained by additive manufacturing.

This allows for the use of self-supporting shielding devices with relatively intricate shapes that conform relatively closely to the shape of the member or members that they shield. It follows that it is relatively easy to provide a shape-lock between that member or those members and the shielding device. The number of parts is minimised. It is still possible to ensure that each shielding device moves with the member that the shielding device is arranged to shield. Suitable additive manufacturing methods includes extrusion printing (multi-jet) fusion printing and laser sintering, amongst others. Fusion printing and extrusion printing allow polymer materials to be used for the shielding parts, e.g. polypropylene.

### Brief Description of Drawings

The invention will be explained in further detail with reference to the accompanying drawings, in which:
- Fig. 1: is a schematic top plan view of an apparatus for electrochemical surface treatment of workpieces, which apparatus comprises a conveying system comprising a plurality of gripping devices;
- Fig. 2: is a perspective view of a first gripping device;
- Fig. 3: is a side plan view of the first gripping device;
- Fig. 4: is a side plan view of an upper electrically conducting member of the first gripping device;
- Fig. 5: is a detailed perspective view of an end section of the upper member shown in Fig. 4;
- Fig. 6: is a further detailed perspective view of the end section of the upper member shown in Figs. 4 and 5;
- Fig. 7: is a detailed perspective view of the end section of Figs. 5 and 6, together with an electrically insulating shielding part;
- Fig. 8: is a perspective view of the end section of the upper member and a shielding part assembly;
- Fig. 9: is a rear perspective view of the end section of the upper member and the shielding part assembly;
- Fig. 10: is a further rear perspective view of the end section of the upper member and the shielding part assembly with one shielding part removed;
- Fig. 11: is a perspective view of one of the shielding parts of the shielding part assembly of Fig. 10;
- Fig. 12: is a further perspective view of the shielding part shown in Fig. 11;
- Fig. 13: is a perspective view of another one of the shielding parts of the shielding part assembly of Fig. 10;
- Fig. 14: is a perspective view of yet another one of the shielding parts of the shielding part assembly of Fig. 10;
- Fig. 15: is a side plan view of a lower electrically conducting member of the first gripping device;
- Fig. 16: is a detailed view of an end section of the lower electrically conducting member shown in Fig. 15;
- Fig. 17: is a detailed view of the end section of the lower electrically conducting members with electrically insulating shielding parts assembled thereon;
- Fig. 18: is a perspective view of only an assembly of the shielding parts of Fig. 17;
- Fig. 19: is a perspective view of one of the shielding parts in the assembly of Fig. 18;
- Fig. 20: is a perspective view of another one of the shielding parts in the assembly of Fig. 18
- Fig. 21: is a perspective view of a second gripping device;
- Fig. 22: is a side plan view of the second gripping device;
- Fig. 23: is a perspective view of an upper guide interconnecting upper and lower electrically conducting members of the second gripping device;
- Fig. 24: is a detailed view of a lower guide interconnecting the upper and lower electrically conducting members of the second gripping device;
- Fig. 25: is a detailed view of a lower end section of the second gripping device;
- Fig. 26: is a side plan view of an upper electrically conducting member of the second gripping device;
- Fig. 27: is a detailed view of an end section of the upper electrically conducting member shown in Fig. 26;
- Fig. 28: is a detailed perspective view of the end section of the upper electrically conducting member shown in Figs. 26 and 27;
- Fig. 29: is a perspective view of the end section of the upper electrically conducting member with electrically insulating shielding parts assembled thereto;
- Fig. 30: is a rear perspective view of the end section of the upper electrically conducting member with electrically insulating shielding parts assembled thereto;
- Fig. 31: is a perspective view of a one of the shielding parts shown in Fig. 30;
- Fig. 32: is a perspective view of another one of the shielding parts shown in Fig. 30;
- Fig. 33: is a side plan view of a lower electrically conducting member of the second gripping device;
- Fig. 34: is a detailed view of an end section of the lower electrically conducting member shown in Fig. 33;
- Fig. 35: is a detailed view of the end section shown in Fig. 34 with electrically insulating shielding parts assembled thereto;
- Fig. 36: is a perspective view of one of the shielding parts shown in Fig. 35;
- Fig. 37: is a perspective view of another one of the shielding parts shown in Fig. 35;
- Fig. 38: is a is a perspective view of yet another one of the shielding parts shown in Fig. 35;
- Fig. 39: is a perspective view of a third gripping device;
- Fig. 40: is a side plan view of the third gripping device;
- Fig. 41: is a detailed side plan view of part of a lower guide interconnecting upper and lower electrically conducting members of the third gripping device;
- Fig. 42: is a detailed perspective view of part of an upper guide interconnecting the upper and lower electrically conducting members of the third gripping device;
- Fig. 43: is a side plan view of the upper electrically conducting member of the third gripping device;
- Fig. 44: is a perspective view of an end section of the upper electrically conducting member of Fig. 43;
- Fig. 45: is a perspective view of an assembly of electrically insulating shielding parts for the upper electrically conducting member of Figs. 43 and 44;
- Fig. 46: is a perspective view of one of the shielding parts of the assembly of Fig. 45;
- Fig. 47: is a perspective view of another one of the shielding parts of the assembly of Fig. 45;
- Fig. 48: is a bottom view of the assembly of shielding parts of Fig. 45;
- Fig. 49: is a side plan view of the lower electrically conducting member of the third gripping device;
- Fig. 50: is a perspective view of an end section of the lower electrically conducting member shown in Fig. 49;
- Fig. 51: is a perspective view of an electrically insulating shielding part for the lower electrically conducting member shown in Figs. 49 and 50;
- Fig. 52: is a perspective view of a further electrically insulating shielding part for the lower electrically conducting member shown in Figs. 49 and 50;
- Fig. 53: is a detailed side view of a lower end of the third gripping device;
- Fig. 54: is a perspective view of a fourth gripping device;
- Fig. 55: is a side plan view of the fourth gripping device;
- Fig. 56: is a perspective view of a lower section of the fourth gripping device;
- Fig. 57: is a side plan view of an upper electrically conducting member of the fourth gripping device;
- Fig. 58: is a detailed perspective view of a lower section of the upper electrically conducting member shown in Fig. 57;
- Fig. 59: is a perspective view of an assembly of electrically insulating shielding parts for the upper electrically conducting member;
- Fig. 60: is a perspective view of one of the shielding parts of the assembly of Fig. 59;
- Fig. 61: is a further perspective view of the shielding part shown in Fig. 60;
- Fig. 62: is a perspective view of another one of the shielding parts of the assembly of Fig. 59;
- Fig. 63: is a perspective view of yet a further one of the shielding parts shown in Fig. 60;
- Fig. 64: is a side plan view of a lower electrically conducting member of the fourth gripping device;
- Fig. 65: is a detailed perspective view of an end section of the lower electrically conducting member;
- Fig. 66: is a detailed perspective view of the lower electrically conducting member with a shielding comprised of electrically insulating shielding parts assembled thereto;
- Fig. 67: is a perspective view of one of the shielding parts of Fig. 66;
- Fig. 68: is a perspective view of another one of the shielding parts of Fig. 66;
- Fig. 69: is a perspective view of a fifth gripping device;
- Fig. 70: is a side plan view of the fifth gripping device;
- Fig. 71: is a detailed perspective view of an end section of the fifth gripping device;
- Fig. 72: is a further detailed perspective view of the end section of the fifth gripping device;
- Fig. 73: is a perspective view of an upper electrically conducting member of the fifth gripping device;
- Fig. 74: is a detailed perspective view of an end section of the upper electrically conducting member;
- Fig. 75: is a detailed perspective view of the upper electrically conducting member with several electrically insulating shielding parts assembled thereto;
- Fig. 76: is a perspective view of one of the shielding parts of Fig. 75;
- Fig. 77: is a perspective view of another one of the shielding parts of Fig. 75;
- Fig. 78: is a side plan view of a lower electrically conducting member of the fifth gripping device;
- Fig. 79: is a detailed perspective view of an end section of the lower electrically conducting member shown in Fig. 78;
- Fig. 80: is a perspective view of the lower electrically conducting member with several electrically insulating shielding parts assembled thereto;
- Fig. 81: is a perspective view of one of the shielding parts shown in Fig. 80;
- Fig. 82: is a perspective view of another one of the shielding parts shown in Fig. 80; and
- Fig. 83: is a diagram with graph showing a thickness of an electroplated copper layer applied by an apparatus of the type shown in Fig. 1.

### Description of Embodiments

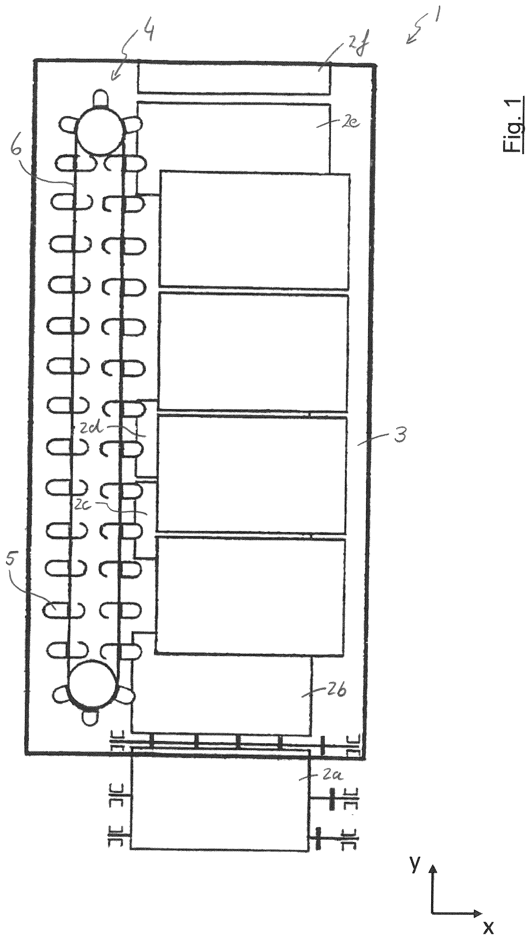

An apparatus 1 for electrochemical surface treatment of planar workpieces 2a-f (Fig. 1) comprises a liquid electrolyte bath 3 and a conveying system 4 for conveying the workpieces 2a-f through the bath 3 (Fig. 1). In the illustrated embodiment, the conveying system 4 is a horizontal conveying system 4. The workpieces 2a-f are conveyed in a direction *y* of movement and have a certain width in a direction *x* transverse to the direction yof movement.

The electrochemical surface treatment may be etching or electroplating, for example. In the illustrated embodiment, both of the opposing major surfaces of the planar workpieces 2a-f undergo treatment. Counter-electrodes (not shown) are arranged above and below the plane in which the planar workpieces 2a-f are conveyed. The surfaces are contacted by gripping devices 5 close to a lateral edge (with respect to the direction *y* of movement). In the illustrated embodiment, the workpieces 2a-f are gripped along only one of their lateral edges. In an alternative embodiment, the workpieces 2a-f are gripped along both lateral edges. In such an alternative embodiment, there is a conveying system 4 on each side of the path of the workpieces 2a-f through the apparatus 1.

The conveying system 4 of the illustrated embodiment comprises a driving device in the form of a chain or belt conveyor 6, with the gripping devices 5 being attached to the chain or belt at intervals along the chain or belt. Each gripping device 5 comprises a biasing device, to be discussed in more detail below, that biases the gripping device 5 into a configuration in which the workpiece 2a-f is gripped. Engagement devices comprising cams (not shown) are situated at a start and at an end of a path of the workpiece 2a-f through the apparatus 1. The cams engage the gripping device 5 as the gripping device 5 is moved against and along the cam by the driving device to cause the gripping device 5 to move out of the gripping configuration against a restoring force exerted by the biasing device, and thus allow the workpiece 2a-f to move relative to the gripping device 5. In this way, the workpiece 2a-f is automatically gripped at the start of the path and released at the end of the path.

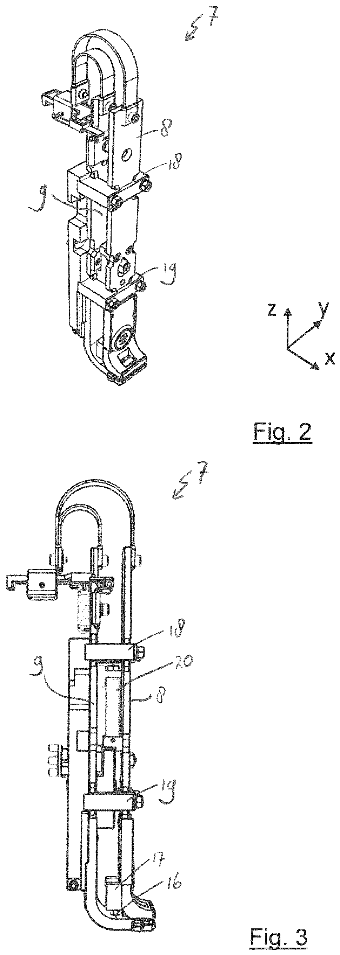

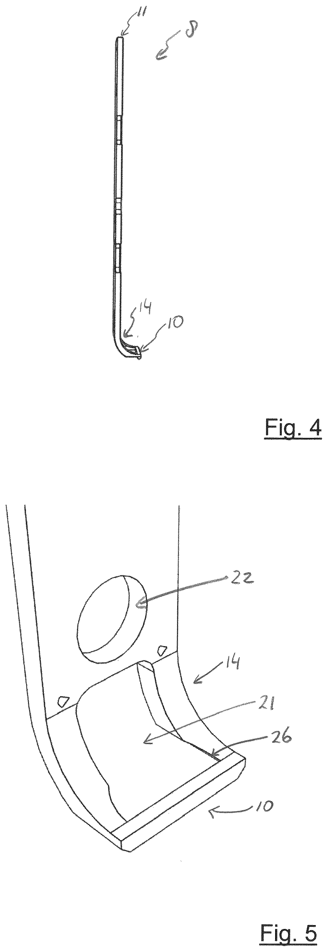

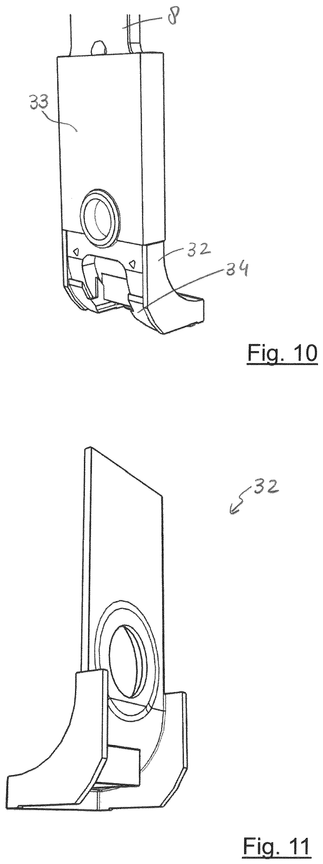

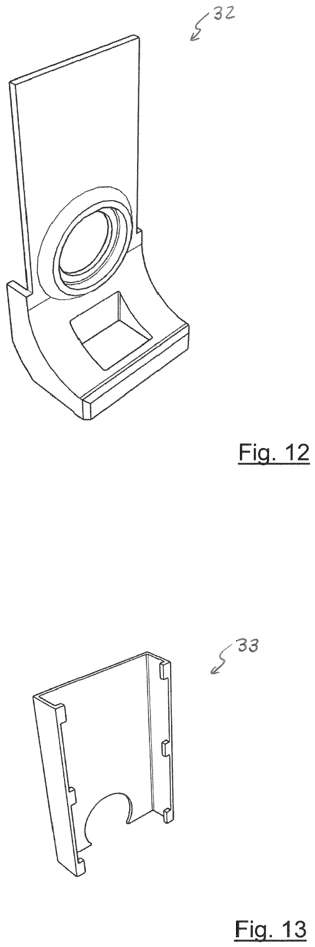

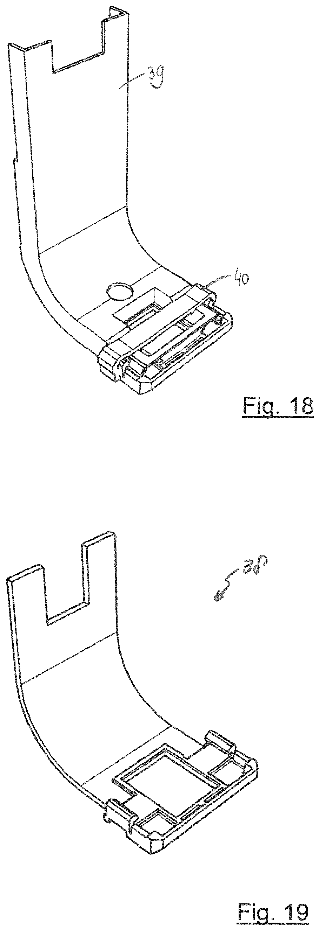

A first gripping device 7 (Figs. 2-20) comprises an upper elongated electrically conducting member 8 and a lower elongated electrically conducting member 9. The upper member 8 extends in longitudinal direction between a first end 10 and a second end 11 (Fig. 4). The lower member 9 likewise extends in longitudinal direction between a first end 12 and a second end 13.

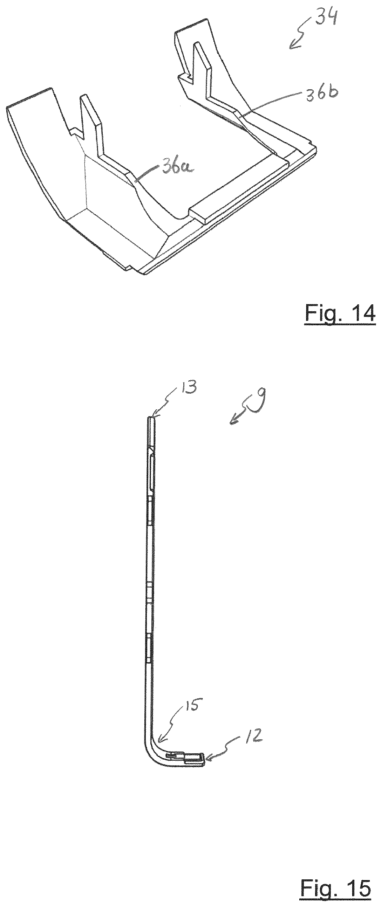

With reference to Figs. 2 and 15, the upper member 8 and the lower member 9 have a basic shape in the form of a strip with a width in a direction *y* generally parallel to the edge of the workpiece 2a-f, in use. However, the lateral edges have an irregular shape and are chamfered, and various apertures are provided through the upper and lower members 8,9. In addition, the upper member 8 is provided with a bend 14 at a position closer to the first end 10 than to the second end 11 along the extent (i.e. length) of the upper member 8. The lower member 9 is also provided with a bend 15 at a position closer to the first end 12 than to the second end 13 along the extent (i.e. length) of the lower member 9. Each of the bends 14,15 marks a transition between a relatively long section and a relatively short section of the upper member 8 and the lower member 9 respectively. These sections are approximately at right angles, so that the upper and lower members 8,9 are approximately J-shaped, seen in the direction *y* defining the width of the members 8,9. The angle may be larger in an alternative embodiment, e.g. up to 135°.

The upper and lower members 8,9 are journalled for relative movement in a plane *xz* perpendicular to the direction *y* defining the width of the members 8,9. Relative movement in the direction *y* defining the width of the members 8,9 is constrained. This is achieved by a journal bearing comprising a guide pin 16 (Fig. 3) attached to the lower member 9 and a guide block 17 fixed to the upper member 8 and provided with a hole for receiving the guide pin 16. In addition, the lower and upper members 9,8 are held by brackets 18,19 (Figs. 2, 3) that constrain their relative movement. A biasing device in the form of a spring 20 (Fig. 3) is arranged to urge the upper and lower member 8,9 towards each other. In this way, the upper and lower members 8,9 are journalled for mainly rectilinear relative movement toward and away from each other.

The upper member 8 is provided with a main aperture 21 through the upper member 8. In the illustrated embodiment, there is also a secondary aperture 22 through the upper member 8. The main aperture 21 extends over the entire extent of the bend 14 and slightly beyond the bend 14 towards the second end 11. At least part of the main aperture 21 is thus located in the bend 14.

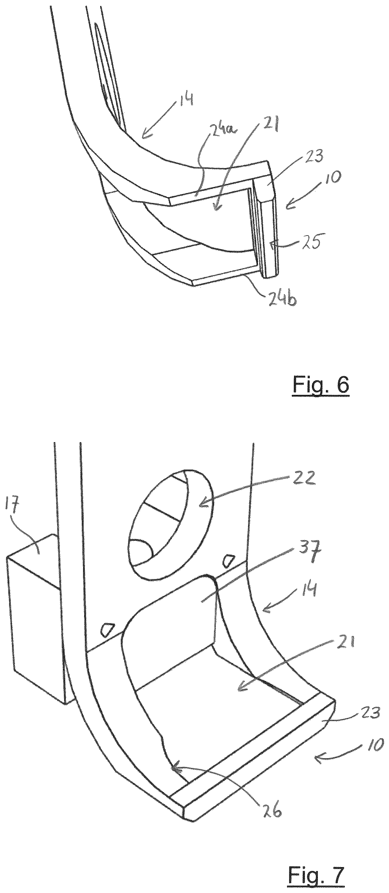

A raised part in the form of a ridge 23 is provided on a side of the upper member 8 facing the lower member 9. In the illustrated embodiment, the ridge 23 is elongated, extends in the direction *y* defining the width of the upper member 8 and projects in the direction *z* defining the thickness of the upper member 8 at the first end 10. The ridge 23 is provided at the first end 10. In alternative embodiments, the ridge 23 may be provided close to, but not directly at the first end 10. The ridge 23 projects with respect to adjacent surface sections 24a,b (Fig. 6). An exposed surface 25 is defined by the apex of the ridge 23. This exposed surface 25 is configured directly to contact the surface of the workpiece 2a-f, in use, to provide electrical contact and exert a gripping force.

In the illustrated embodiment, a section of an edge 26 (Fig. 5-7) of the main aperture 21 runs essentially along a base of the ridge 23. In an alternative embodiment, the two are spaced apart in the direction in which the upper member 8 extends.

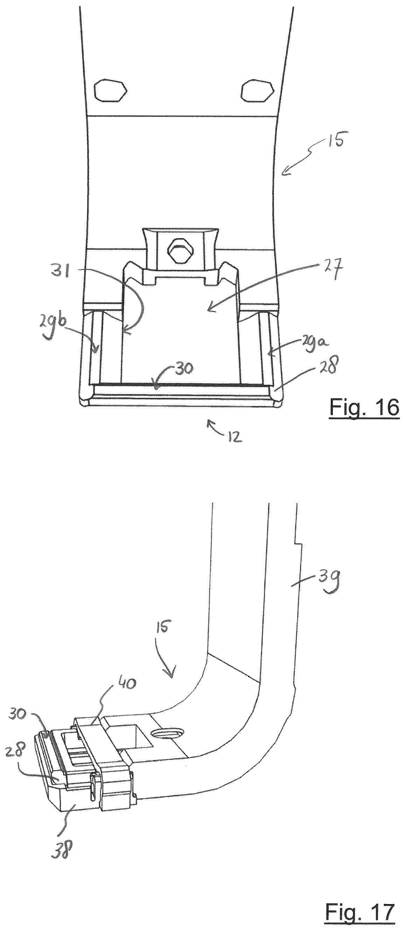

The lower member 9 is likewise provided with a main aperture 27 (Fig. 16) through the lower member 9. This main aperture 27 is entirely located between the bend 15 and the first end 12 of the lower member 9.

A raised part in the form of a ridge 28 is provided on a side of the lower member 9 facing the upper member 9. In the illustrated embodiment, the ridge 28 is elongated, extends in the direction *y* defining the width of the lower member 9 and projects in the direction *z* defining the thickness of the lower member 9 at the first end 12. The ridge 28 is provided at the first end 12. In alternative embodiments, the ridge 28 may be provided close to, but not directly at the first end 12. The ridge 28 projects with respect to adjacent surface sections 29a,b. An exposed surface 30 is defined by the apex of the ridge 28. This exposed surface 30 is configured directly to contact the surface of the workpiece 2a-f in use to provide electrical contact and exert a gripping force.

In the illustrated embodiment, a section of an edge 31 of the main aperture 27 runs essentially along a base of the ridge 28. In an alternative embodiment, the two are spaced apart in the direction in which the lower member 8 extends, so that there is also an adjacent surface section between the ridge 28 and the main aperture 27 with respect to which the ridge 28 protrudes.

In use, the short sections of the upper and lower members 8,9 and sub-sections of the longer sections of the upper and lower members 8,9 are submerged in liquid electrolyte. The liquid electrolyte is able flow between the upper and lower members 8,9 everywhere except for where they are interconnected and where the ridges 23,28 grip the workpiece 2a-f. To avoid that the upper and lower members 8,9, which are connected to respective current supplies or a common current supply, distort the electric field between the workpiece surfaces and counter-electrodes in the processing apparatus 1, the parts of the upper and lower member 8,9 intended for submersion are shielded by electrically insulating shielding parts.

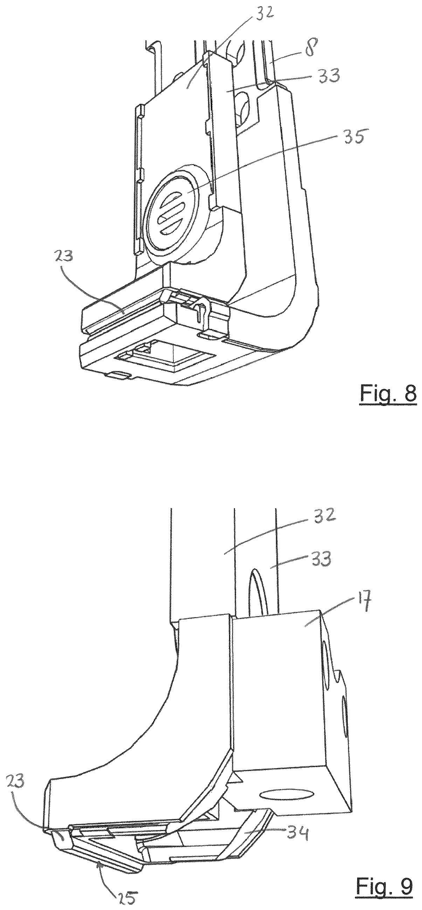

The upper member 8 is shielded by first, second and third upper member shielding parts 32-34, by a plug 35 (Fig. 8) and by the guide block 17. They need not all be made of the same material, but they are made of material having a lower electrical conductivity than the material of which the upper member 8 is made. The first, second and third upper member shielding parts 32-34 interlock with each other to form an assembly having an interior shape complementary to that of the upper member 8, so that they are held in position without the need for fasteners. The plug 35 fits an aperture in the first upper member shielding part 32 and an opening in the second upper member shielding part 33, so that further fasteners are not required to hold the plug 35 in position. The secondary aperture 22 is thereby closed. A separate, e.g. elastic, sealing element may be provided to enhance the sealing effect provided by the plug 35 and help keep the plug 35 in position. The guide block 17 is fixed to the upper member 8 by fasteners (not shown).

The edge 26 of the main aperture 21 is shielded by sections 36a,b (Fig. 14) of the third upper member shielding part 34 that extend into the main aperture 21, as well as by a section 37 (Fig. 7) of the guide block 17 that extends into the main aperture 21. Thus, a shielding frame of a liquid-permeable window exposing a section of the surface of the workpiece 2a-f between a lateral edge of the workpiece 2a-f and the area of contact with the exposed surface 25 is provided.

The first upper member shielding part 32 and the third upper member shielding part 34 extend to the base of the ridge 23. However, their surfaces facing in the direction of the lower member 9 are set back with respect to the exposed surface 25. The ridge 23 protrudes with respect to, in particular, the third upper member shielding part 34. The third upper member shielding part 34 covers the surface sections 24a,b adjacent the ridge 23. When the workpiece 2a-f is gripped, a gap is formed between the shielding (in this case the third upper member shielding part 34) and the surface of the workpiece 2a-f. Liquid electrolyte can flow between the shielding and the surface of the workpiece 2a-f to allow for treatment of that section of the surface. As a consequence, the exposed surface 25 can contact the surface of the workpiece 2a-f at a relatively large distance from the lateral edge of the workpiece 2a-f.

The first, second and third upper member shielding parts 32-34 are self-supporting parts, obtainable by additive manufacturing.

The lower member 9 is shielded by first and second lower member shielding parts 38,39 and partly by a clip 40. These parts interlock to provide an assembly having an interior shape complementary to that of the lower member 9. Fasteners for direct fastening of any of these parts to the lower member 9 are therefore not required.

The second lower member shielding part 39 comprises a section 41 that extends into the main aperture 27 to cover the edge 31 of the main aperture 27. The second lower member shielding part 39 also covers the surface sections 29a,b adjacent the ridge 28. The exposed surface 30 defined by the apex of the ridge 28 is left uncovered. Indeed, the surfaces of the second lower member shielding part 39 and the clip 40 that face the upper member 8 are set back with respect to the exposed surface 30. When the workpiece 2a-f is gripped, a gap is formed between the shielding (in this case the second lower member shielding part 39 and the clip 40) and the surface of the workpiece 2a-f. Liquid electrolyte can flow between the shielding and the surface of the workpiece 2a-f to allow for treatment of that section of the surface. As a consequence, the exposed surface 30 can contact the surface of the workpiece 2a-f at a relatively large distance from the lateral edge of the workpiece 2a-f. Only the area of contact with the exposed surface 30 is left untreated.

The first and second lower member shielding parts 38,39 and the clip 40 are self-supporting parts, obtainable by additive manufacturing.

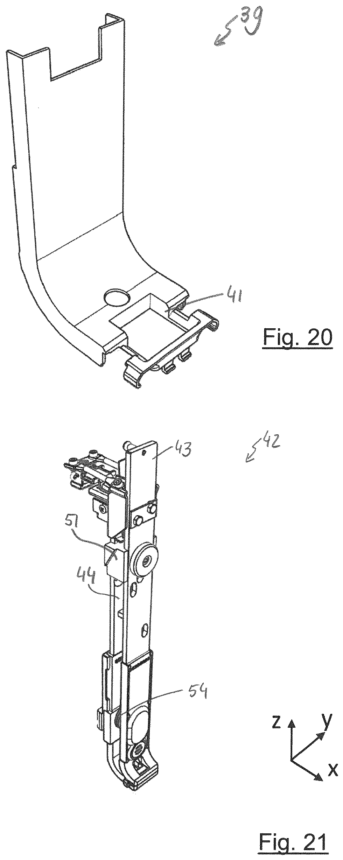

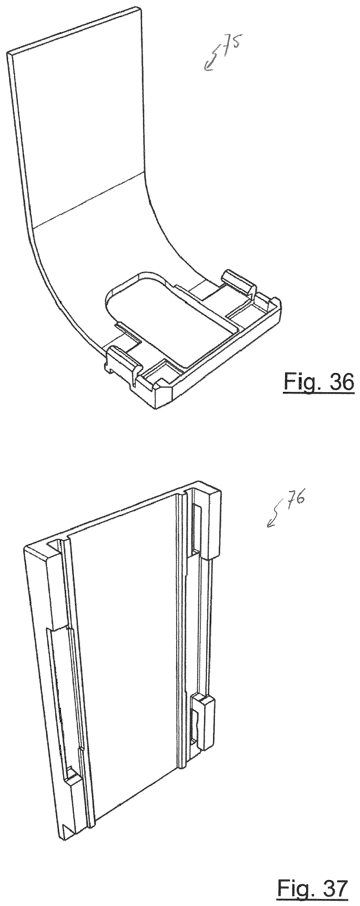

A second gripping device 42 (Figs. 21-38) also comprises an upper elongated electrically conducting member 43 and a lower elongated electrically conducting member 44. The upper member 43 extends in longitudinal direction between a first end 45 and a second end 46. The lower member 44 likewise extends in longitudinal direction between a first end 47 and a second end 48.

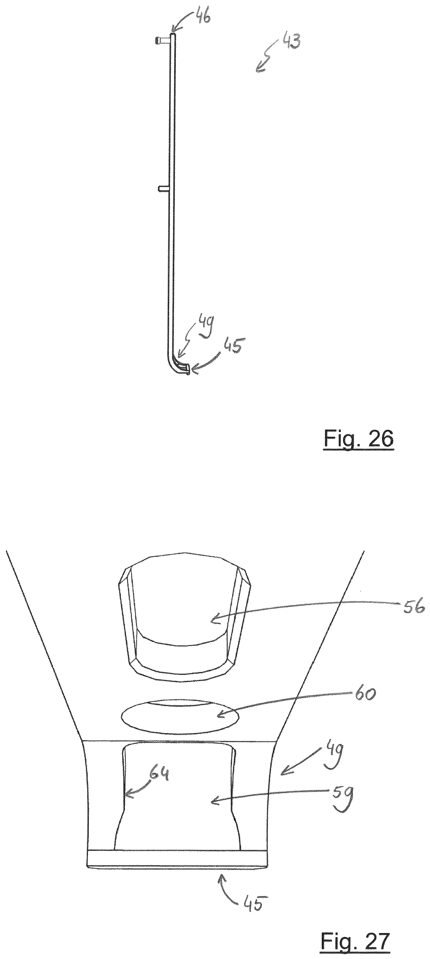

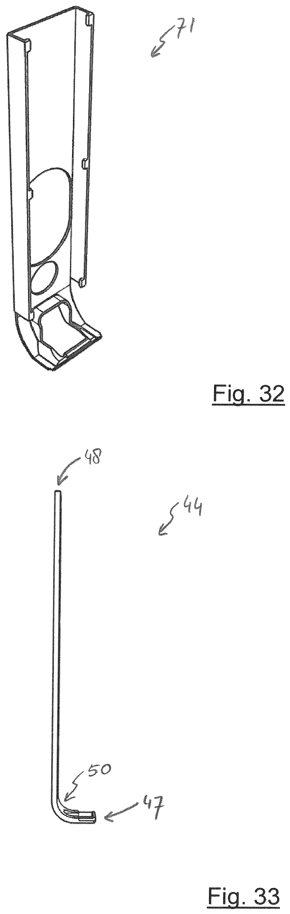

With reference to Figs. 26 and 33, the upper member 43 and the lower member 44 have a basic shape in the form of a strip with a width in a direction *y* generally parallel to the edge of the workpiece 2a-f, in use. However, the lateral edges have an irregular shape and are chamfered, and various apertures are provided through the upper and lower members 43,44. Furthermore, the upper member 43 has integral protruding pins, which may be welded to the strip-shaped main part of the upper member 43, for example.

The upper member 43 is provided with a bend 49 at a position closer to the first end 45 than to the second end 46 along the extent (i.e. length) of the upper member 43. The lower member 44 is also provided with a bend 50 at a position closer to the first end 47 than to the second end 48 along the extent (i.e. length) of the lower member 44. Each of the bends 49,50 marks a transition between a relatively long section and a relatively short section of the upper member 43 and the lower member 44 respectively. These sections are approximately at right angles, so that the upper and lower members 43,44 are approximately J-shaped, seen in the direction *y* defining the width of the members 43,44. The angle may be larger in an alternative embodiment, e.g. up to 135°.

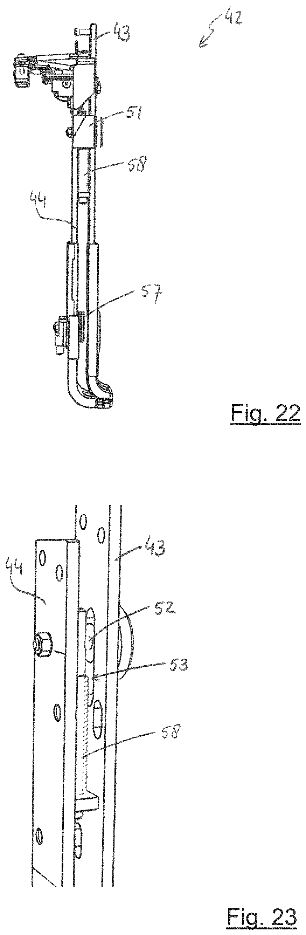

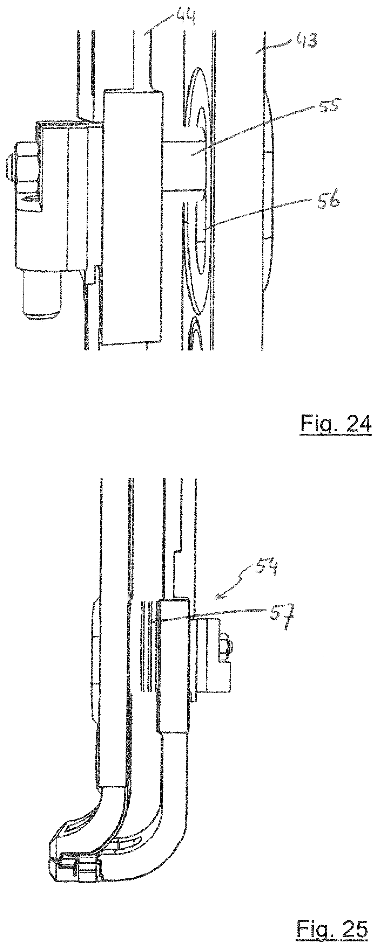

The upper and lower members 43,44 are journalled for relative movement in a plane *xz* perpendicular to the direction *y* defining the width of the members 43,44. Relative movement in the direction *y* defining the width of the members 43,44 is constrained. The way in which this is achieved differs from that of the first gripping device 7. Instead, an upper guide 51 comprises a pin 52 (Fig. 23) extending through and movable within a slot 53 formed in the upper member 43. The slot 53 extends in longitudinal direction. The pin 52 is fixed to and protrudes from the lower member 44. A lower guide 54 also comprises a pin 55 (Fig. 24) extending through and moving within a slot 56 formed in the upper member 43. Again, the slot 56 extends in longitudinal direction.

The pin 55 is fixed to and protrudes from the lower member 44. A corrugated shielding part 57 (Fig. 25) shields the pin 55. The corrugated shielding part 57 is made of electrically insulating material, e.g. polymer material. One or both of opposite ends of the corrugated shielding part 57 may be fixed in position relative to the upper member 43 and the lower member 44, respectively. The corrugated shielding part 57 flexes as the upper and lower members 43,44 move relative to each other. Furthermore, an elastic force due to compression of the corrugated shielding part 57 keeps the ends of the corrugated shielding part 57 pressed against the upper and lower members 43,44.

A biasing device in the form of a spring 58 is arranged to urge the upper and lower member 43,44 towards each other. In this way, the upper and lower members 43,44 are journalled for mainly rectilinear relative movement toward and away from each other.

The upper member 43 is provided with a main aperture 59 (Fig. 27) through the upper member 43 in addition to the guide slots 53,56. In the illustrated embodiment, there is also a secondary aperture 60 through the upper member 43, located between the main aperture 59 and the slot 56 of the lower guide 54. The main aperture 59 extends over the entire extent of the bend 49 and slightly beyond the bend 49 towards the second end 46. At least part of the main aperture 59 is thus located in the bend 49.

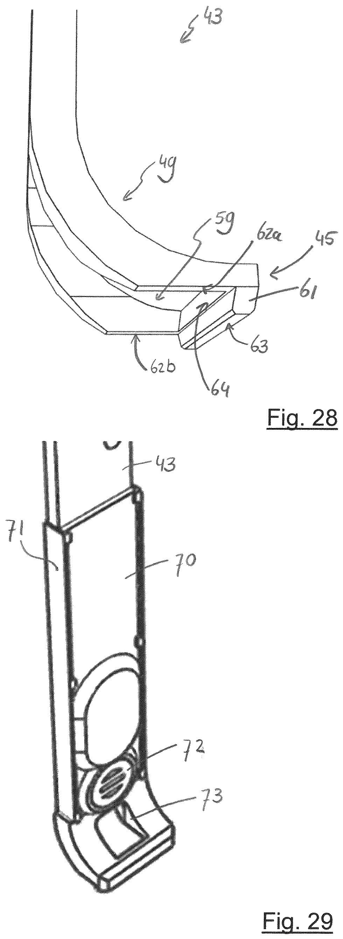

A raised part in the form of a ridge 61 (Fig. 28) is provided on a side of the upper member 43 facing the lower member 44. In the illustrated embodiment, the ridge 61 is elongated, extends in the direction *y* defining the width of the upper member 43 and projects in the direction *z* defining the thickness of the upper member 43 at the first end 45. The ridge 61 is provided at the first end 45. In alternative embodiments, the ridge 61 may be provided close to, but not directly at the first end 45. The ridge 61 projects with respect to adjacent surface sections 62a,b. An exposed surface 63 is defined by the apex of the ridge 61. This exposed surface 63 is configured directly to contact the surface of the workpiece 2a-f, in use, to provide electrical contact and exert a gripping force.

In the illustrated embodiment, a section of an edge 64 of the main aperture 59 runs essentially along a base of the ridge 61. In an alternative embodiment, the two are spaced apart in the direction in which the upper member 43 extends.

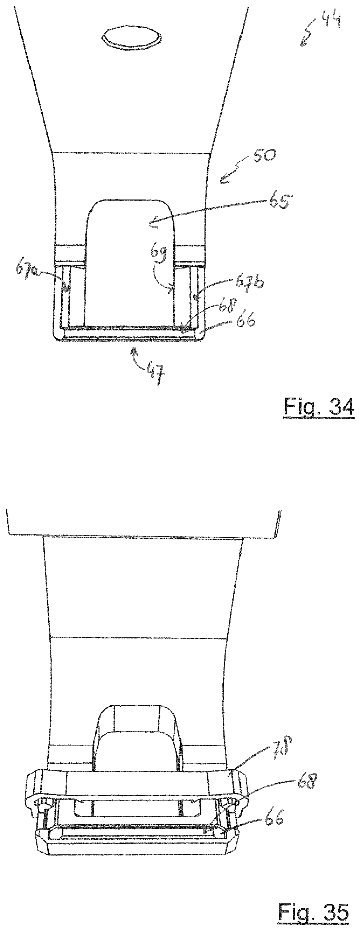

The lower member 44 is likewise provided with a main aperture 65 (Fig. 34) through the lower member 44. This main aperture 65 is also partly located in the bend 50 and partly in the section of the lower member 44 extending between the bend 50 and the first end 47.

A raised part in the form of a ridge 66 is provided on a side of the lower member 44 facing the upper member 44. In the illustrated embodiment, the ridge 66 is elongated, extends in the direction *y* defining the width of the lower member 44 and projects in the direction *z* defining the thickness of the lower member 44 at the first end 47. The ridge 66 is provided at the first end 47. In alternative embodiments, the ridge 66 may be provided close to, but not directly at the first end 47. The ridge 66 projects with respect to adjacent surface sections 67a,b. An exposed surface 68 is defined by the apex of the ridge 66. This exposed surface 68 is configured directly to contact the surface of the workpiece 2a-f in use to provide electrical contact and exert a gripping force.

In the illustrated embodiment, a section of an edge 69 of the main aperture 65 runs essentially along a base of the ridge 66. In an alternative embodiment, the two are spaced apart in the direction in which the lower member 43 extends, so that there is also an adjacent surface section between the ridge 66 and the main aperture 65 with respect to which the ridge 66 protrudes.

In use, the short sections of the upper and lower members 43,44 and sub-sections of the longer sections of the upper and lower members 43,44 are submerged in liquid electrolyte. The liquid electrolyte is able flow between the upper and lower members 43,44 everywhere except for where they are interconnected, in particular by the lower guide 54 and the corrugated shielding part 57, and where the ridges 61,66 grip the workpiece 2a-f. To avoid that the upper and lower members 43,44, which are connected to respective current supplies or a common current supply, distort the electric field between the workpiece surfaces and counter-electrodes in the processing apparatus 1, the parts of the upper and lower member 43,44 intended for submersion are shielded by electrically insulating shielding parts.

The upper member 43 is shielded by first and second upper member shielding parts 70,71, by a plug 72 and by the corrugated shielding part 57. They need not all be made of the same material, but they are made of material having a lower electrical conductivity than the material of which the upper member 43 is made. The first and second upper member shielding parts 70,71 interlock with each other to form an assembly having an interior shape complementary to that of the upper member 43, so that they are held in position without the need for fasteners. The plug 72 fits an aperture in the first upper member shielding part 70 and an aperture in the second upper member shielding part 71, so that further fasteners are not required to hold the plug 72 in position. The secondary aperture 60 is thereby closed. A separate, e.g. elastic, sealing element may be provided to enhance the sealing effect provided by the plug 72 and help keep the plug 72 in position.

The edge 64 of the main aperture 59 is shielded by sections 73 (only one of them is visible in the drawings) of the first upper member shielding part 70 that extend into the main aperture 59. Thus, a shielding frame of a liquid-permeable window exposing a section of the surface of the workpiece 2a-f between a lateral edge of the workpiece 2a-f and the area of contact with the exposed surface 63 is provided.

The second upper member shielding part 71 extends to the base of the ridge 61. The first upper member shielding part 70 covers the first end 45 so as also to extend to the base of the ridge 61, but to leave the exposed surface 63 free from shielding.

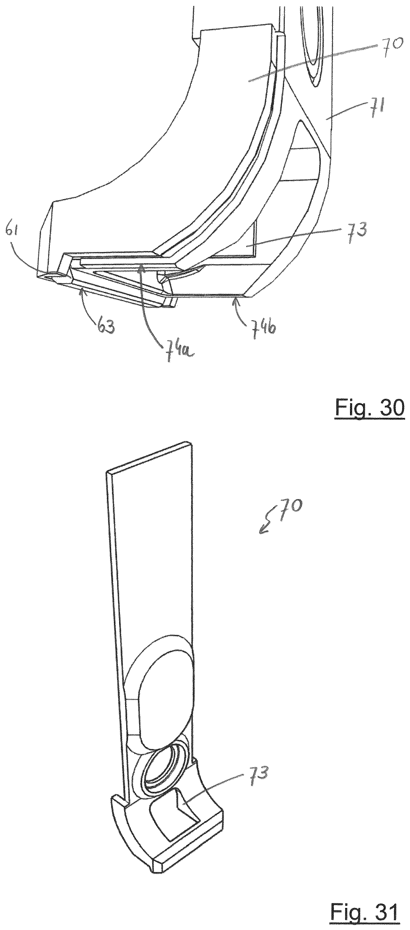

Surfaces 74a,b (Fig. 30) of the second upper member shielding part 71 facing in the direction of the lower member 44 are set back with respect to the exposed surface 63. When the workpiece 2a-f is gripped, a gap is formed between the shielding (in this case the second upper member shielding part 71) and the surface of the workpiece 2a-f. Liquid electrolyte can flow between the shielding and the surface of the workpiece 2a-f to allow for treatment of that section of the surface. As a consequence, the exposed surface 63 can contact the surface of the workpiece 2a-f at a relatively large distance from the lateral edge of the workpiece 2a-f.

The first and second upper member shielding parts 70,71 are self-supporting parts, obtainable by additive manufacturing.

The lower member 44 is shielded by first, second and third lower member shielding parts 75-77 and partly by a clip 78. These parts interlock to provide an assembly having an interior shape complementary to that of the lower member 44. Fasteners for direct fastening of any of these parts to the lower member 44 are therefore not required.

The third lower member shielding part 77 comprises a section 79 that extends into the main aperture 65 to cover the edge 69 of the main aperture 65. The third lower member shielding part 77 and clip 78 also cover the surface sections 67a,b adjacent the ridge 66. The exposed surface 68 defined by the apex of the ridge 66 is left uncovered. Indeed, the surfaces of the third lower member shielding part 77 and the clip 78 that face the upper member 43 are set back with respect to the exposed surface 68. When the workpiece 2a-f is gripped, a gap is formed between the shielding (in this case the third lower member shielding part 77 and the clip 78) and the surface of the workpiece 2a-f. Liquid electrolyte can flow between the shielding and the surface of the workpiece 2a-f to allow for treatment of that section of the surface. As a consequence, the exposed surface 68 can contact the surface of the workpiece 2a-f at a relatively large distance from the lateral edge of the workpiece 2a-f. Only the area of contact with the exposed surface 68 is left untreated.

The first, second and third lower member shielding parts 75,76,77 and the clip 78 are self-supporting parts, obtainable by additive manufacturing.

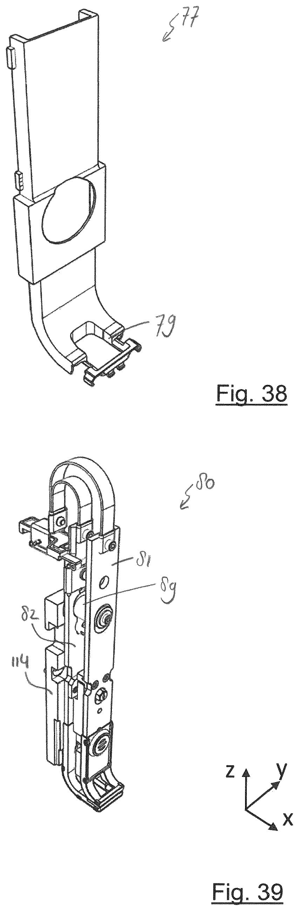

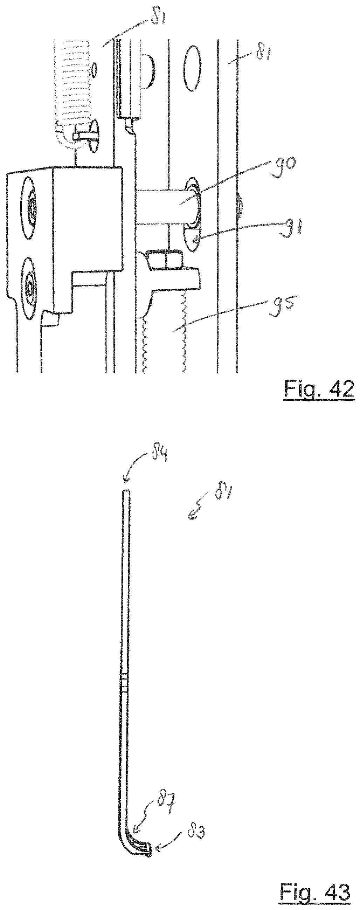

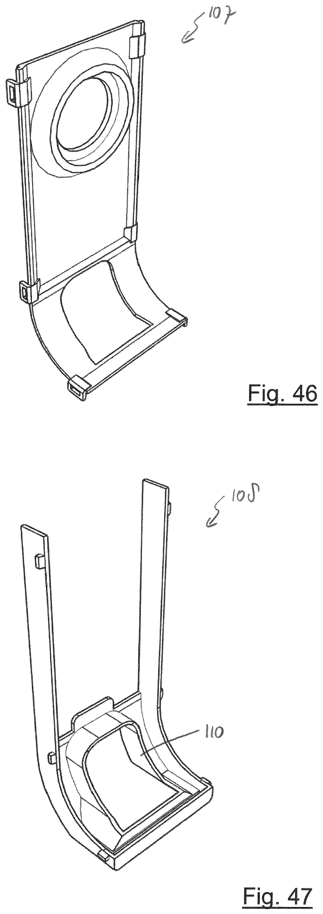

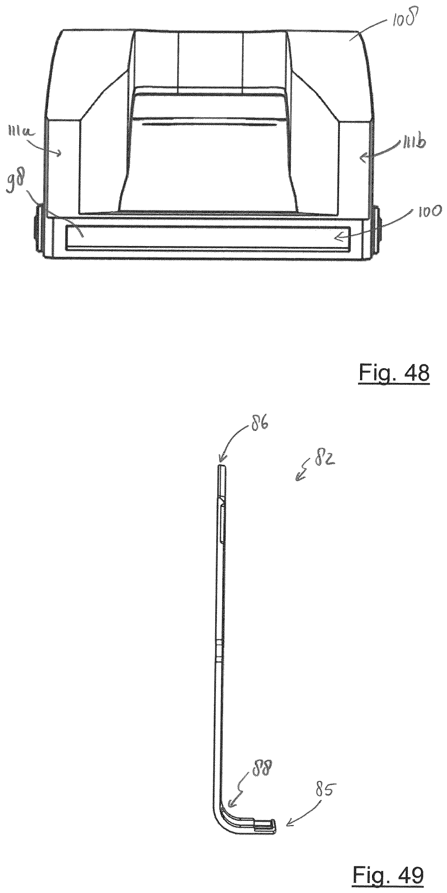

A third gripping device 80 (Figs. 39-53) also comprises an upper elongated electrically conducting member 81 and a lower elongated electrically conducting member 82. The upper member 81 extends in longitudinal direction between a first end 83 and a second end 84 (Fig. 43). The lower member 82 likewise extends in longitudinal direction between a first end 85 and a second end 86 (Fig. 49).

With reference to Figs. 43 and 49, the upper member 81 and the lower member 82 have a basic shape in the form of a strip with a width in a direction *y* generally parallel to the edge of the workpiece 2a-f, in use. However, the lateral edges have an irregular shape and are chamfered, and various apertures are provided through the upper and lower members 81,82.

The upper member 81 is provided with a bend 87 at a position closer to the first end 83 than to the second end 84 along the extent (i.e. length) of the upper member 81. The lower member 82 is also provided with a bend 88 at a position closer to the first end 85 than to the second end 86 along the extent (i.e. length) of the lower member 82. Each of the bends 87,88 marks a transition between a relatively long section and a relatively short section of the upper member 81 and the lower member 82 respectively. These sections are approximately at right angles, so that the upper and lower members 81,82 are approximately J-shaped, seen in the direction *y* defining the width of the members 81,82. The angle may be larger in an alternative embodiment, e.g. up to 135°.

The upper and lower members 81,82 are journalled for relative movement in a plane *xz* perpendicular to the direction *y* defining the width of the members 81,82. Relative movement in the direction *y* defining the width of the members 81,82 is constrained. The way in which this is achieved differs slightly from that of the first gripping device 7 and the second gripping device 42. An upper guide 89 is constituted in the same way as the upper guide 51 of the second gripping device 42, i.e. with a pin 90 protruding from the lower member 82 that is movable in an elongated slot 91 through the upper member 81 extending in longitudinal direction (Fig. 42).

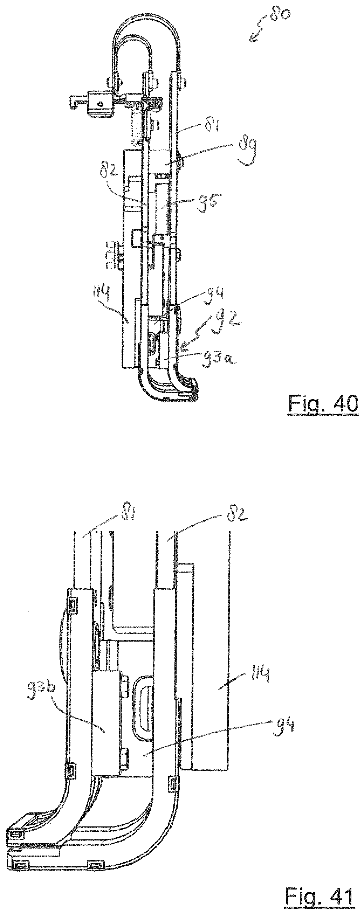

A lower guide 92 (Figs. 40, 41) comprises lower guide blocks 93a,b provided with V-shaped grooves extending in longitudinal direction and facing each other, in which a lower guide part 94 comprising lateral inverted V-shaped profiles is arranged to move. This lower guide 92 also interconnects the upper and lower members 81,82. The lower guide blocks 93a,b and the lower guide part 94 are made of electrically insulating material. They may be made of metal or an alloy in an alternative embodiment, in which case an electrically insulating part may be interposed between them and the upper or lower member 81,82 to which they are mounted.

A biasing device in the form of a spring 95 (Figs. 40, 42) is arranged to urge the upper and lower member 81,82 towards each other. In this way, the upper and lower members 81,82 are journalled for mainly rectilinear relative movement toward and away from each other.

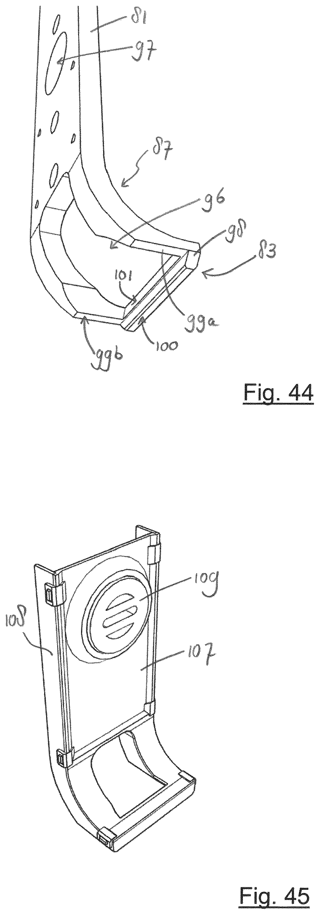

The upper member 81 is provided with a main aperture 96 (Fig. 44) through the upper member 81 in addition to the upper guide slot 91. In the illustrated embodiment, there is also a secondary aperture 97 through the upper member 81. The main aperture 96 extends over the entire extent of the bend 87 and slightly beyond the bend 87 towards the second end 84. At least part of the main aperture 96 is thus located in the bend 87.

A raised part in the form of a ridge 98 is provided on a side of the upper member 81 facing the lower member 82. In the illustrated embodiment, the ridge 98 is elongated, extends in the direction *y* defining the width of the upper member 81 and projects in the direction *z* defining the thickness of the upper member 81 at the first end 83. The ridge 98 is provided at the first end 83. In alternative embodiments, the ridge 98 may be provided close to, but not directly at the first end 83. The ridge 98 projects with respect to adjacent surface sections 99a,b. An exposed surface 100 is defined by the apex of the ridge 98. This exposed surface 100 is configured directly to contact the surface of the workpiece 2a-f, in use, to provide electrical contact and exert a gripping force.

In the illustrated embodiment, a section of an edge 101 of the main aperture 96 runs essentially along a base of the ridge 98. In an alternative embodiment, the two are spaced apart in the direction in which the upper member 81 extends.

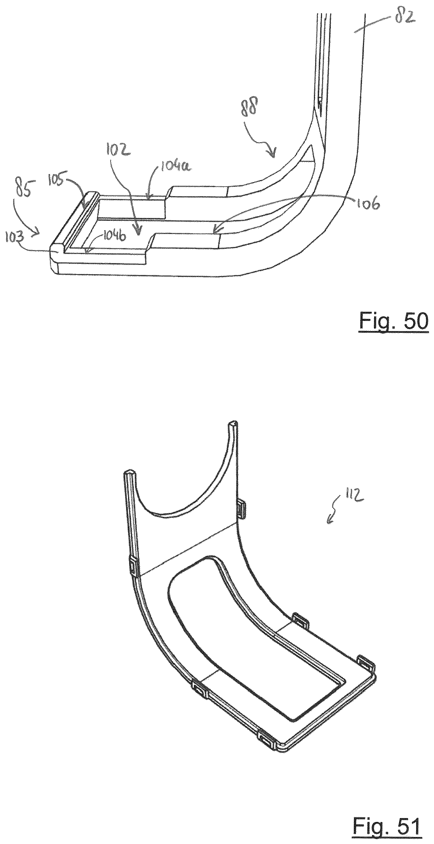

The lower member 82 is likewise provided with a main aperture 102 (Fig. 50) through the lower member 82. This main aperture 102 is also partly located in the bend 88 and partly in the section of the lower member 82 extending between the bend 88 and the first end 85.

A raised part in the form of a ridge 103 is provided on a side of the lower member 82 facing the upper member 82. In the illustrated embodiment, the ridge 103 is elongated, extends in the direction *y* defining the width of the lower member 82 and projects in the direction *z* defining the thickness of the lower member 82 at the first end 85. The ridge 103 is provided at the first end 85. In alternative embodiments, the ridge 103 may be provided close to, but not directly at the first end 85. The ridge 103 projects with respect to adjacent surface sections 104a,b. An exposed surface 105 is defined by the apex of the ridge 103. This exposed surface 105 is configured directly to contact the surface of the workpiece 2a-f in use to provide electrical contact and exert a gripping force.

In the illustrated embodiment, a section of an edge 106 of the main aperture 102 runs essentially along a base of the ridge 103. In an alternative embodiment, the two are spaced apart in the direction in which the lower member 81 extends, so that there is also an adjacent surface section between the ridge 103 and the main aperture 102 with respect to which the ridge 103 protrudes.

In use, the short sections of the upper and lower members 81,82 and sub-sections of the longer sections of the upper and lower members 81,82 are submerged in liquid electrolyte. The liquid electrolyte is able flow between the upper and lower members 81,82 everywhere except for where they are interconnected, in particular by the lower guide 92, and where the ridges 98,103 grip the workpiece 2a-f. To avoid that the upper and lower members 81,82, which are connected to respective current supplies or a common current supply, distort the electric field between the workpiece surfaces and counter-electrodes in the processing apparatus 1, the parts of the upper and lower member 81,82 intended for submersion are shielded by electrically insulating shielding parts.

The upper member 81 is shielded by first and second upper member shielding parts 107,108, by the lower guide blocks 93a,b and by a plug 109 (Fig. 45). They need not all be made of the same material, but they are made of material having a lower electrical conductivity than the material of which the upper member 81 is made. The first and second upper member shielding parts 107,108 interlock with each other to form an assembly having an interior shape complementary to that of the upper member 81, so that they are held in position without the need for fasteners. The plug 109 fits an aperture in the first upper member shielding part 107, so that further fasteners are not required to hold the plug 109 in position. The secondary aperture 97 is thereby closed. A separate, e.g. elastic, sealing element may be provided to enhance the sealing effect provided by the plug 109 and help keep the plug 109 in position.

The edge 101 of the main aperture 96 is shielded by a section 110 of the second upper member shielding part 108 that extends into the main aperture 96. Thus, a shielding frame of a liquid-permeable window exposing a section of the surface of the workpiece 2a-f between a lateral edge of the workpiece 2a-f and the area of contact with the exposed surface 100 is provided.

The second upper member shielding part 108 extends to and around the base of the ridge 98. The ridge 98 extends through an aperture in the second upper member shielding part 108, so that the exposed surface 100 is free from shielding.

Surfaces 111a,b of the second upper member shielding part 108 facing in the direction of the lower member 82 are set back with respect to the exposed surface 100 (Fig. 48). When the workpiece 2a-f is gripped, a gap is formed between the shielding (in this case the second upper member shielding part 108) and the surface of the workpiece 2a-f. Liquid electrolyte can flow between the shielding and the surface of the workpiece 2a-f to allow for treatment of that section of the surface. As a consequence, the exposed surface 100 can contact the surface of the workpiece 2a-f at a relatively large distance from the lateral edge of the workpiece 2a-f.

The first and second upper member shielding parts 107,108 are self-supporting parts, obtainable by additive manufacturing.

The lower member 82 is shielded by first and second lower member shielding parts 112,113 and by a mounting block 114. The first and second lower member shielding parts 112,113 interlock to provide an assembly having an interior shape complementary to that of the lower member 82. Fasteners for direct fastening of any of these parts to the lower member 82 are therefore not required.

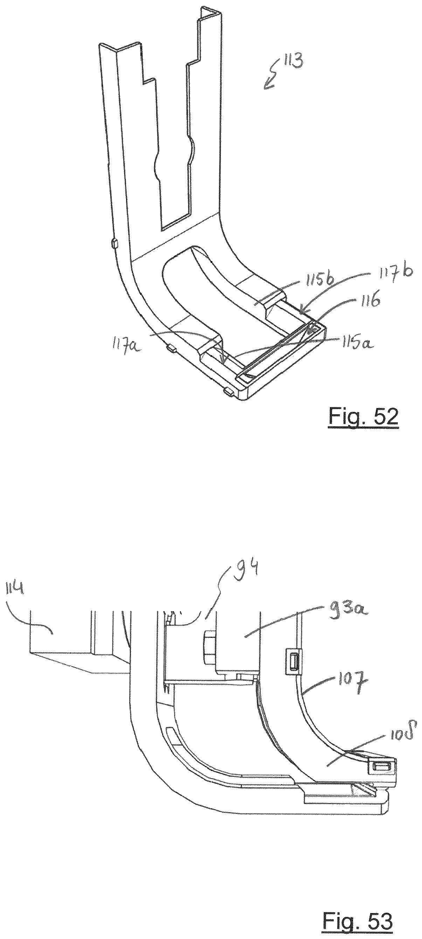

The second lower member shielding part 113 comprises sections 115a,b (Fig. 52) that extend into the main aperture 102 to cover the edge 106 of the main aperture 102. The second lower member shielding part 76 also covers the surface sections 104a,b adjacent the ridge 103. In fact, the ridge 103 protrudes through an aperture 116 in the second lower member shielding part 113. The exposed surface 105 defined by the apex of the ridge 103 is thus left uncovered. Surface sections 117a,b of the second lower member shielding part 113 that face the upper member 81 are set back with respect to the exposed surface 105. When the workpiece 2a-f is gripped, a gap is formed between the shielding (in this case the second lower member shielding part 113) and the surface of the workpiece 2a-f. Liquid electrolyte can flow between the shielding and the surface of the workpiece 2a-f to allow for treatment of that section of the surface. As a consequence, the exposed surface 105 can contact the surface of the workpiece 2a-f at a relatively large distance from the lateral edge of the workpiece 2a-f. Only the area of contact with the exposed surface 105 is left untreated.

The first and second lower member shielding parts 112,113 are self-supporting parts, obtainable by additive manufacturing.

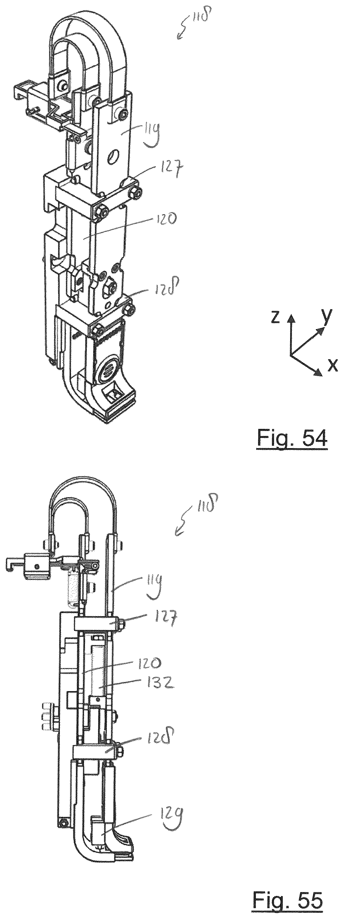

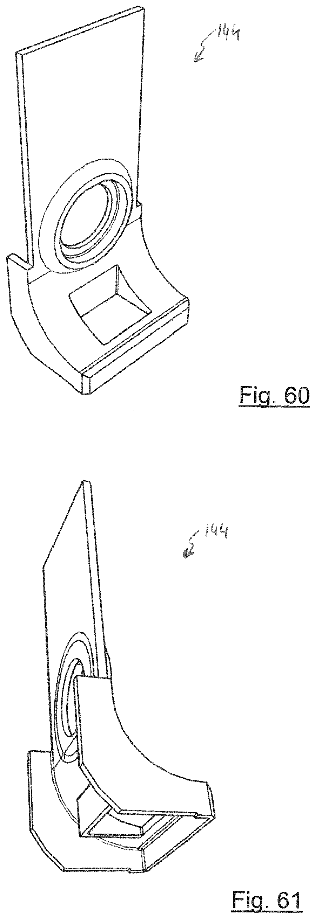

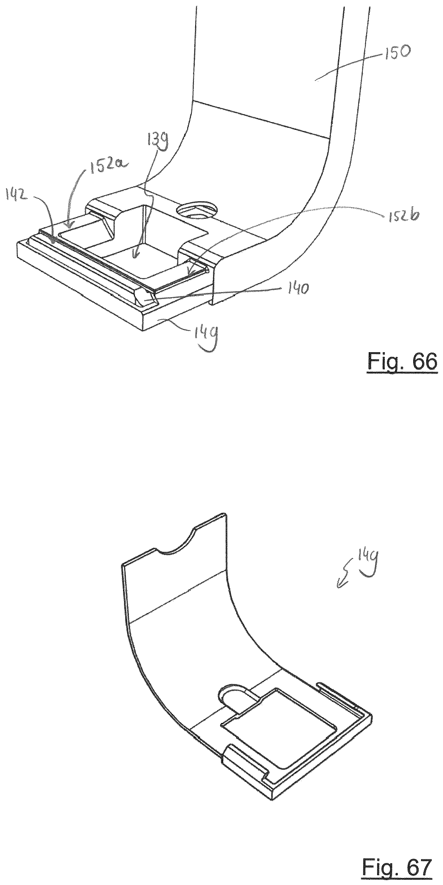

A fourth gripping device 118 (Figs. 54-68) also comprises an upper elongated electrically conducting member 119 and a lower elongated electrically conducting member 120. The upper member 119 extends in longitudinal direction between a first end 121 and a second end 122. The lower member 120 likewise extends in longitudinal direction between a first end 123 and a second end 124.

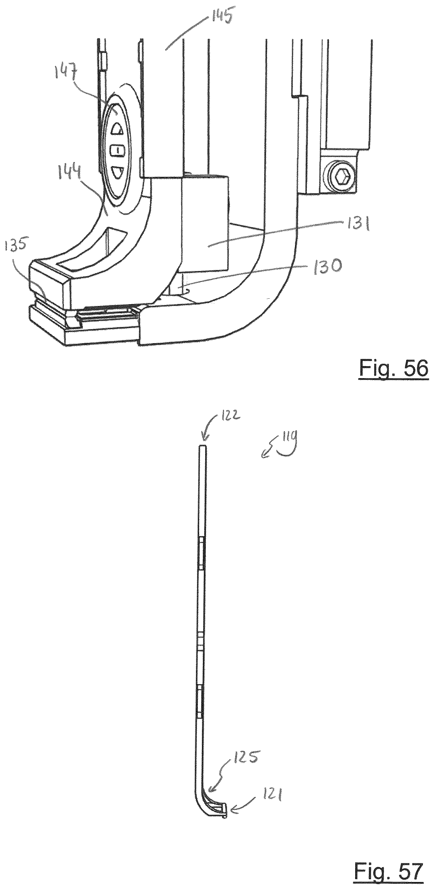

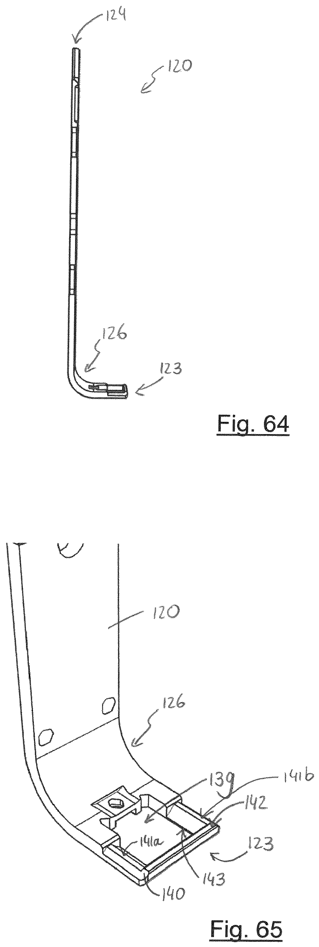

With reference to Figs. 57 and 64, the upper member 119 and the lower member 120 have a basic shape in the form of a strip with a width in a direction *y* generally parallel to the edge of the workpiece 2a-f, in use. However, the lateral edges have an irregular shape and are chamfered, and various apertures are provided through the upper and lower members 119,120.

The upper member 119 is provided with a bend 125 at a position closer to the first end 121 than to the second end 122 along the extent (i.e. length) of the upper member 119. The lower member 120 is also provided with a bend 126 at a position closer to the first end 123 than to the second end 124 along the extent (i.e. length) of the lower member 120. Each of the bends 125,126 marks a transition between a relatively long section and a relatively short section of the upper member 119 and the lower member 120 respectively. These sections are approximately at right angles, so that the upper and lower members 119,120 are approximately J-shaped, seen in the direction *y* defining the width of the members 119,120. The angle may be larger in an alternative embodiment, e.g. up to 135°.

The upper and lower members 119,120 are journalled for relative movement in a plane *xz* perpendicular to the direction *y* defining the width of the members 119,120. Relative movement in the direction *y* defining the width of the members 119,120 is constrained. The way in which this is achieved is essentially the same as that of the first gripping device 7. An upper bracket 127 and a lower bracket 128 (Figs. 54, 55) are provided at respective positions along the extent of the upper and lower members 119,120. The brackets 127,128 are provided between the bends 125,126 and the second ends 122,124. In alternative embodiments, one of the brackets 127,128 may be omitted or additional brackets may be used.

A lower guide 129 comprises a journal bearing comprising a guide pin 130 attached to the lower member 120 and a guide block 131 fixed to the upper member 119 and provided with a hole for receiving the guide pin 130 (Fig. 56).

A biasing device in the form of a spring 132 is arranged to urge the upper and lower member 119,120 towards each other. In this way, the upper and lower members 119,120 are journalled for mainly rectilinear relative movement toward and away from each other.

The upper member 119 is provided with a main aperture 133 through the upper member 119. In the illustrated embodiment, there is also a secondary aperture 134 through the upper member 119. The main aperture 133 extends over the entire extent of the bend 125 and slightly beyond the bend 125 towards the second end 122. At least part of the main aperture 133 is thus located in the bend 125.

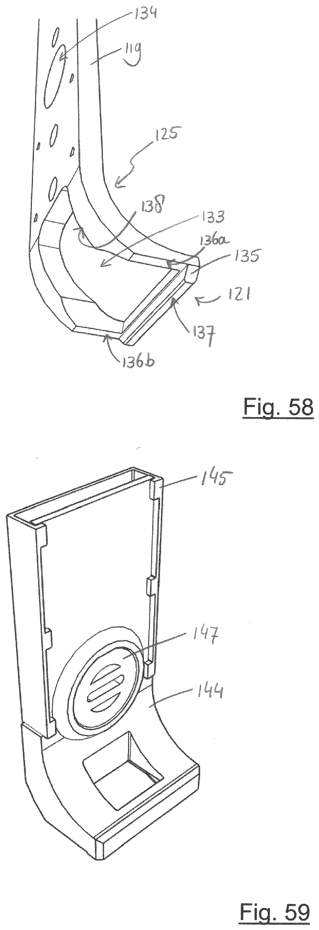

A raised part in the form of a ridge 135 is provided on a side of the upper member 119 facing the lower member 120 (Fig. 58). In the illustrated embodiment, the ridge 135 is elongated, extends in the direction *y* defining the width of the upper member 119 and projects in the direction *z* defining the thickness of the upper member 119 at the first end 121. The ridge 135 is provided at the first end 121. In alternative embodiments, the ridge 135 may be provided close to, but not directly at the first end 121. The ridge 135 projects with respect to adjacent surface sections 136a,b. An exposed surface 137 is defined by the apex of the ridge 135. This exposed surface 137 is configured directly to contact the surface of the workpiece 2a-f, in use, to provide electrical contact and exert a gripping force.

In the illustrated embodiment, a section of an edge 138 of the main aperture 133 runs essentially along a base of the ridge 135. In an alternative embodiment, the two are spaced apart in the direction in which the upper member 119 extends.

The lower member 120 is likewise provided with a main aperture 139 through the lower member 120. This main aperture 139 is also partly located in the bend 126 and partly in the section of the lower member 120 extending between the bend 126 and the first end 123.

A raised part in the form of a ridge 140 (Fig. 65) is provided on a side of the lower member 120 facing the upper member 120. In the illustrated embodiment, the ridge 140 is elongated, extends in the direction *y* defining the width of the lower member 120 and projects in the direction *z* defining the thickness of the lower member 120 at the first end 123. The ridge 140 is provided at the first end 123. In alternative embodiments, the ridge 140 may be provided close to, but not directly at the first end 123. The ridge 140 projects with respect to adjacent surface sections 141a,b. An exposed surface 142 is defined by the apex of the ridge 140. This exposed surface 142 is configured directly to contact the surface of the workpiece 2a-f in use to provide electrical contact and exert a gripping force.

In the illustrated embodiment, a section of an edge 143 of the main aperture 139 runs essentially along a base of the ridge 140. In an alternative embodiment, the two are spaced apart in the direction in which the lower member 119 extends, so that there is also an adjacent surface section between the ridge 140 and the main aperture 139 with respect to which the ridge 140 protrudes.

In use, the short sections of the upper and lower members 119,120 and subsections of the longer sections of the upper and lower members 119,120 are submerged in liquid electrolyte. The liquid electrolyte is able flow between the upper and lower members 119,120 everywhere except for where they are interconnected, in particular by the lower guide 129, and where the ridges 135,140 grip the workpiece 2a-f. To avoid that the upper and lower members 119,120, which are connected to respective current supplies or a common current supply, distort the electric field between the workpiece surfaces and counter-electrodes in the processing apparatus 1, the parts of the upper and lower member 119,120 intended for submersion are shielded by electrically insulating shielding parts.

The upper member 119 is shielded by first, second and third upper member shielding parts 144-146, by a plug 147 and by the guide block 131. These parts are essentially the same as those of the first gripping device 7. They need not all be made of the same material, but they are made of material having a lower electrical conductivity than the material of which the upper member 119 is made. The first, second and third upper member shielding parts 144-146 interlock with each other to form an assembly having an interior shape complementary to that of the upper member 119, so that they are held in position without the need for fasteners. The plug 147 fits an aperture in the first upper member shielding part 144 and an opening in the second upper member shielding part 145, so that further fasteners are not required to hold the plug 147 in position. The secondary aperture 134 is thereby closed. A separate, e.g. elastic, sealing element may be provided to enhance the sealing effect provided by the plug 147 and help keep the plug 147 in position. The guide block 131 is fixed to the upper member 119 by fasteners (not shown).

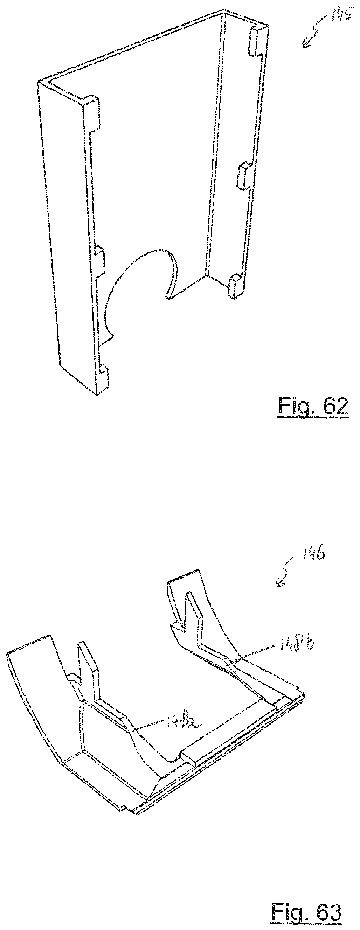

The edge 138 of the main aperture 133 is shielded by sections 148a,b
(Fig. 63) of the third upper member shielding part 146 that extend into the main aperture 133, as well as by a section (not shown) of the guide block 131 that extends into the main aperture 133. Thus, a shielding frame of a liquid-permeable window exposing a section of the surface of the workpiece 2a-f between a lateral edge of the workpiece 2a-f and the area of contact with the exposed surface 25 is provided.

The first upper member shielding part 144 and the third upper member shielding part 146 extend to the base of the ridge 135. However, their surfaces facing in the direction of the lower member 120 are set back with respect to the exposed surface 137. The ridge 135 protrudes with respect to, in particular, the third upper member shielding part 146. The third upper member shielding part 146 covers the surface sections 136a,b adjacent the ridge 135. When the workpiece 2a-f is gripped, a gap is formed between the shielding (in this case the third upper member shielding part 146) and the surface of the workpiece 2a-f. Liquid electrolyte can flow between the shielding and the surface of the workpiece 2a-f to allow for treatment of that section of the surface. As a consequence, the exposed surface 137 can contact the surface of the workpiece 2a-f at a relatively large distance from the lateral edge of the workpiece 2a-f.

The first, second and third upper member shielding parts 144,145,146 are self-supporting parts, obtainable by additive manufacturing.

The lower member 82 is shielded by first and second lower member shielding parts 149,150. The first and second lower member shielding parts 149,150 interlock to provide an assembly having an interior shape complementary to that of the lower member 120. Fasteners for direct fastening of any of these parts to the lower member 120 are therefore not required. In contrast to the first gripping device 7, the clip 40 is also dispensed with.

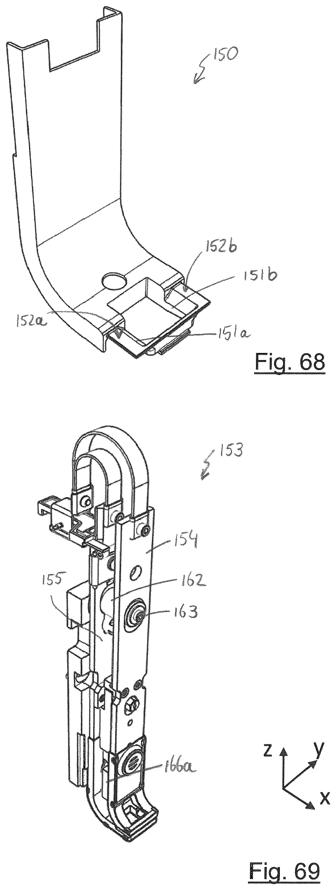

The second lower member shielding part 150 comprises sections 151a,b that extend into the main aperture 139 to cover the edge 143 of the main aperture 139 (Fig. 68). The second lower member shielding part 150 also covers the surface sections 141a,b adjacent the ridge 140. The exposed surface 142 defined by the apex of the ridge 140 is thus left uncovered. Surface sections 152a,b of the second lower member shielding part 150 that face the upper member 119 are set back with respect to the exposed surface 142. When the workpiece 2a-f is gripped, a gap is formed between the shielding (in this case the second lower member shielding part 150) and the surface of the workpiece 2a-f. Liquid electrolyte can flow between the shielding and the surface of the workpiece 2a-f to allow for treatment of that section of the surface. As a consequence, the exposed surface 142 can contact the surface of the workpiece 2a-f at a relatively large distance from the lateral edge of the workpiece 2a-f. Only the area of contact with the exposed surface 142 is left untreated.

The first and second lower member shielding parts 149,150 are self-supporting parts, obtainable by additive manufacturing.

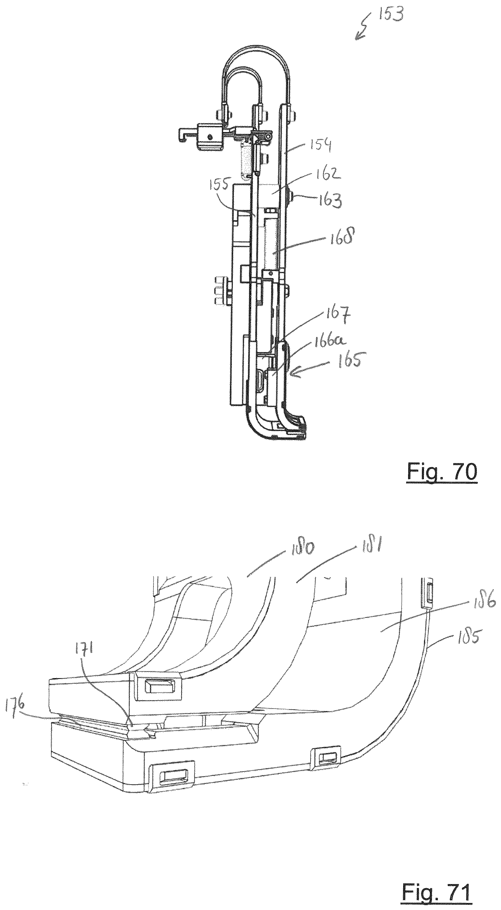

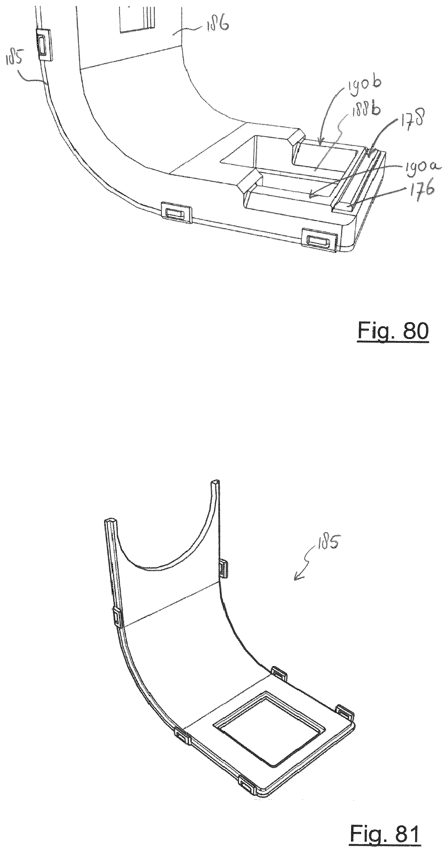

A fifth gripping device 153 (Figs. 69-82) is similar to the third gripping device 80. The fifth gripping device 153 also comprises an upper elongated electrically conducting member 154 and a lower elongated electrically conducting member 155. The upper member 154 extends in longitudinal direction between a first end 156 and a second end 157. The lower member 155 likewise extends in longitudinal direction between a first end 158 and a second end 159.

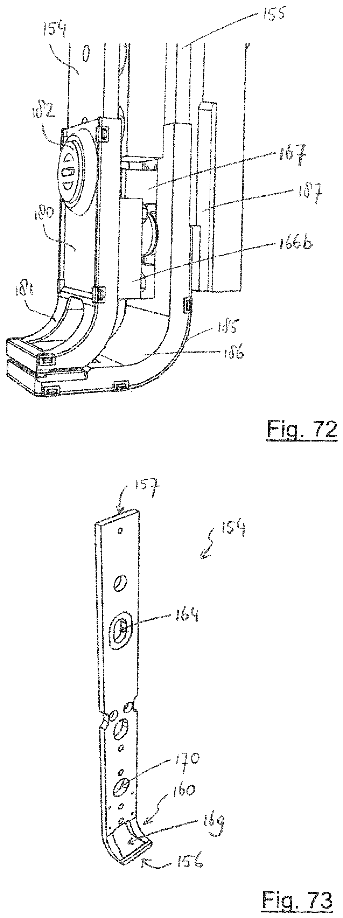

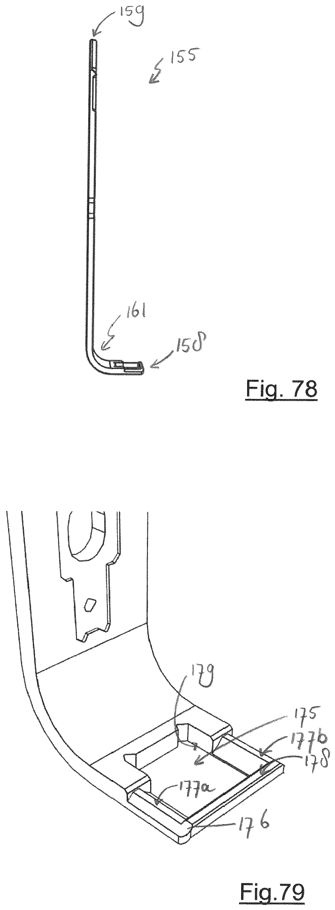

With reference to Figs. 73 and 78, the upper member 154 and the lower member 155 have a basic shape in the form of a strip with a width in a direction *y* generally parallel to the edge of the workpiece 2a-f, in use. However, the lateral edges have an irregular shape and are chamfered, and various apertures are provided through the upper and lower members 154,155.

The upper member 154 is provided with a bend 160 at a position closer to the first end 156 than to the second end 157 along the extent (i.e. length) of the upper member 154. The lower member 155 is also provided with a bend 161 at a position closer to the first end 158 than to the second end 159 along the extent (i.e. length) of the lower member 155. Each of the bends 160,161 marks a transition between a relatively long section and a relatively short section of the upper member 154 and the lower member 155 respectively. These sections are approximately at right angles, so that the upper and lower members 154,155 are approximately J-shaped, seen in the direction *y* defining the width of the members 154,155. The angle may be larger in an alternative embodiment, e.g. up to 135°.

The upper and lower members 154,155 are journalled for relative movement in a plane *xz* perpendicular to the direction *y* defining the width of the members 154,155. Relative movement in the direction *y* defining the width of the members 154,155 is constrained. The way in which this is achieved is the same as for the third gripping device 80. An upper guide 162 comprises a pin 163 protruding from the lower member 155 that is movable in an elongated slot 164 (Fig. 73) through the upper member 154 extending in longitudinal direction.

A lower guide 165 comprises lower guide blocks 166a,b provided with V-shaped grooves extending in longitudinal direction and facing each other, in which a lower guide part 167 comprising lateral inverted V-shaped profiles is arranged to move. This lower guide 165 also interconnects the upper and lower members 154,155. The lower guide blocks 166a,b and the lower guide part 167 are made of electrically insulating material. They may be made of metal or an alloy in an alternative embodiment, in which case an electrically insulating part may be interposed between them and the upper or lower member 154,155 to which they are mounted.

A biasing device in the form of a spring 168 is arranged to urge the upper and lower member 154,155 towards each other. In this way, the upper and lower members 154,155 are journalled for mainly rectilinear relative movement toward and away from each other.

The upper member 154 is provided with a main aperture 169 through the upper member 154 in addition to the upper guide slot 164. In the illustrated embodiment, there is also a secondary aperture 170 through the upper member 154. The main aperture 169 extends over the entire extent of the bend 160 and slightly beyond the bend 160 towards the second end 157. At least part of the main aperture 169 is thus located in the bend 160.

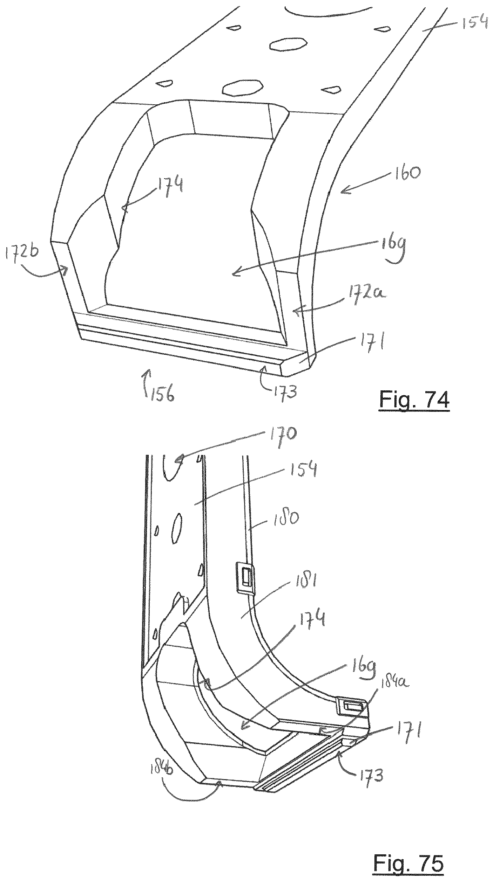

A raised part in the form of a ridge 171 is provided on a side of the upper member 154 facing the lower member 155. In the illustrated embodiment, the ridge 171 is elongated, extends in the direction *y* defining the width of the upper member 154 and projects in the direction *z* defining the thickness of the upper member 154 at the first end 156. The ridge 171 is provided at the first end 156. In alternative embodiments, the ridge 171 may be provided close to, but not directly at the first end 156. The ridge 171 projects with respect to adjacent surface sections 172a,b (Fig. 74). An exposed surface 173 is defined by the apex of the ridge 171. This exposed surface 173 is configured directly to contact the surface of the workpiece 2a-f, in use, to provide electrical contact and exert a gripping force.

In the illustrated embodiment, a section of an edge 174 of the main aperture 169 runs essentially along a base of the ridge 171. In an alternative embodiment, the two are spaced apart in the direction in which the upper member 154 extends.

The lower member 155 is likewise provided with a main aperture 175 through the lower member 155. This main aperture 175 is also partly located in the bend 161 and partly in the section of the lower member 155 extending between the bend 161 and the first end 158.

A raised part in the form of a ridge 176 is provided on a side of the lower member 155 facing the upper member 155. In the illustrated embodiment, the ridge 176 is elongated, extends in the direction *y* defining the width of the lower member 155 and projects in the direction *z* defining the thickness of the lower member 155 at the first end 158. The ridge 176 is provided at the first end 158. In alternative embodiments, the ridge 176 may be provided close to, but not directly at the first end 158. The ridge 176 projects with respect to adjacent surface sections 177a,b (Fig. 79). An exposed surface 178 is defined by the apex of the ridge 176. This exposed surface 178 is configured directly to contact the surface of the workpiece 2a-f in use to provide electrical contact and exert a gripping force.

In the illustrated embodiment, a section of an edge 179 of the main aperture 175 runs essentially along a base of the ridge 176. In an alternative embodiment, the two are spaced apart in the direction in which the lower member 154 extends, so that there is also an adjacent surface section between the ridge 176 and the main aperture 175 with respect to which the ridge 176 protrudes.

In use, the short sections of the upper and lower members 154,155 and subsections of the longer sections of the upper and lower members 154,155 are submerged in liquid electrolyte. The liquid electrolyte is able flow between the upper and lower members 154,155 everywhere except for where they are interconnected, in particular by the lower guide 165, and where the ridges 171,176 grip the workpiece 2a-f. To avoid that the upper and lower members 154,155, which are connected to respective current supplies or a common current supply, distort the electric field between the workpiece surfaces and counter-electrodes in the processing apparatus 1, the parts of the upper and lower member 154,155 intended for submersion are shielded by electrically insulating shielding parts.

The upper member 154 is shielded by first and second upper member shielding parts 180,181, by the lower guide blocks 166a,b and by a plug 182 (Fig. 72). They need not all be made of the same material, but they are made of material having a lower electrical conductivity than the material of which the upper member 154 is made. The first and second upper member shielding parts 180,181 interlock with each other to form an assembly having an interior shape complementary to that of the upper member 154, so that they are held in position without the need for fasteners. The plug 182 fits an aperture in the first upper member shielding part 180, so that further fasteners are not required to hold the plug 182 in position. The secondary aperture 170 is thereby closed. A separate, e.g. elastic, sealing element may be provided to enhance the sealing effect provided by the plug 182 and help keep the plug 182 in position.

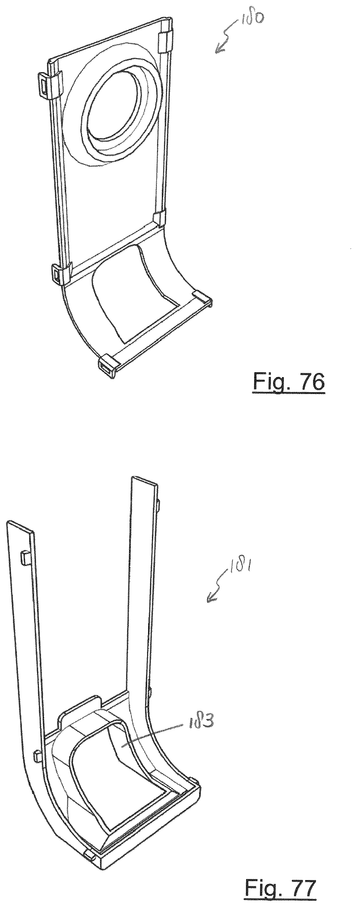

The edge 174 of the main aperture 169 is shielded by a section 183 (Fig. 77) of the second upper member shielding part 181 that extends into the main aperture 169. Thus, a shielding frame of a liquid-permeable window exposing a section of the surface of the workpiece 2a-f between a lateral edge of the workpiece 2a-f and the area of contact with the exposed surface 173 is provided.

The second upper member shielding part 181 extends to and around the base of the ridge 171. The ridge 171 extends through an aperture in the second upper member shielding part 181, so that the exposed surface 173 is free from shielding.

Surfaces 184a,b of the second upper member shielding part 181 facing in the direction of the lower member 155 are set back with respect to the exposed surface 173. When the workpiece 2a-f is gripped, a gap is formed between the shielding (in this case the second upper member shielding part 181) and the surface of the workpiece 2a-f. Liquid electrolyte can flow between the shielding and the surface of the workpiece 2a-f to allow for treatment of that section of the surface. As a consequence, the exposed surface 173 can contact the surface of the workpiece 2a-f at a relatively large distance from the lateral edge of the workpiece 2a-f.

The first and second upper member shielding parts 180,181 are self-supporting parts, obtainable by additive manufacturing.

The lower member 155 is shielded by first and second lower member shielding parts 185,186 and by a mounting block 187 (Fig. 72). The first and second lower member shielding parts 185,186 interlock to provide an assembly having an interior shape complementary to that of the lower member 155. Fasteners for direct fastening of any of these parts to the lower member 155 are therefore not required.

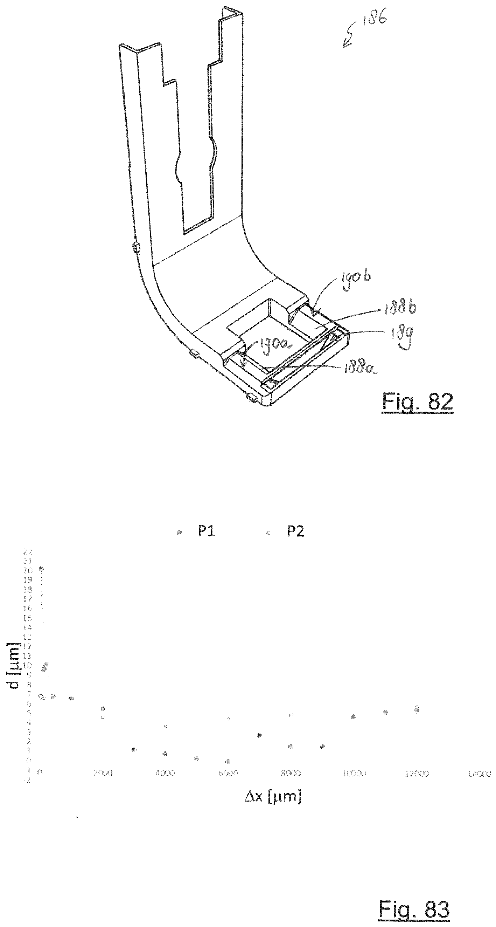

The second lower member shielding part 186 comprises sections 188a,b
(Fig. 82) that extend into the main aperture 175 to cover the edge 179 of the main aperture 175. The second lower member shielding part 186 also covers the surface sections 177a,b adjacent the ridge 176. In fact, the ridge 176 protrudes through an aperture 189 in the second lower member shielding part 186. The exposed surface 178 defined by the apex of the ridge 176 is thus left uncovered. Surface sections 190a,b of the second lower member shielding part 186 that face the upper member 154 are set back with respect to the exposed surface 178. When the workpiece 2a-f is gripped, a gap is formed between the shielding (in this case the second lower member shielding part 186) and the surface of the workpiece 2a-f. Liquid electrolyte can flow between the shielding and the surface of the workpiece 2a-f to allow for treatment of that section of the surface. As a consequence, the exposed surface 178 can contact the surface of the workpiece 2a-f at a relatively large distance from the lateral edge of the workpiece 2a-f. Only the area of contact with the exposed surface 178 is left untreated.

The first and second lower member shielding parts 185,186 are self-supporting parts, obtainable by additive manufacturing.

A gripping device 5 with the features of one of the gripping devices 7,42,80,118,153 was used in an apparatus like the apparatus 1 described above to electroplate a panel with the results shown in Fig. 83. The thickness of the deposited layer is plotted against the distance in the direction xtrans-verse to the direction *y* of movement of the panel through the apparatus. A first position P1 is the position at a location at which the gripping device 5 gripped the panel. A second position P2 is the position at a location adjacent thereto. One can see that the graph for the first position P1 shows a dip where the exposed surface of the gripping device 5 contacted the panel, but that the thickness on either side in the direction *x* transverse to the direction of movement is substantially the same. Thus, the area of contact no longer needs to be close to the edge of the panel.

The invention is not limited to the embodiments described above, which may be varied within the scope of the claims. Instead of single ridges 28,23, there can be a pattern of protruding parts defining respective exposed surfaces, for example. Reference is made to US 6,887,113 B1 in this respect.

### List of reference numerals

- 1 -: Processing apparatus
- 2a-f -: Workpieces
- 3 -: Bath
- 4 -: Conveying system
- 5 -: Gripping device
- 6 -: Conveyor
- 7 -: 1^{st} Gripping device
- 8 -: Upper member
- 9 -: Lower member
- 10 -: 1^{st} End of upper member
- 11 -: 2^{nd} End of upper member
- 12 -: 1^{st} End of lower member
- 13 -: 2^{nd} End of lower member
- 14 -: Bend in upper member
- 15 -: Bend in lower member
- 16 -: Guide pin
- 17 -: Guide block
- 18 -: Upper bracket
- 19 -: Lower bracket
- 20 -: Spring
- 21 -: Main aperture in upper member
- 22 -: Secondary aperture in upper member
- 23 -: Ridge on upper member
- 24a,b -: Adjacent surface sections
- 25 -: Exposed surface of upper member
- 26 -: Main aperture edge
- 27 -: Main aperture of lower member
- 28 -: Ridge on lower member
- 29a,b -: Adjacent surface sections
- 30 -: Exposed surface of lower member
- 31 -: Main aperture edge
- 32 -: 1^{st} Upper member shielding part
- 33 -: 2^{nd} Upper member shielding part
- 34 -: 3^{rd} Upper member shielding part
- 35 -: Plug
- 36a,b -: 3^{rd} Upper member shielding part sections
- 37 -: Guide block section
- 38 -: 1^{st} Lower member shielding part
- 39 -: 2^{nd} Lower member shielding part
- 40 -: Clip
- 41 -: 2^{nd} Lower member shielding part section
- 42 -: 2^{nd} Gripping device
- 43 -: Upper member
- 44 -: Lower member
- 45 -: 1^{st} End of upper member
- 46 -: 2^{nd} End of upper member
- 47 -: 1^{st} End of lower member
- 48 -: 2^{nd} End of lower member
- 49 -: Bend in upper member
- 50 -: Bend in lower member
- 51 -: Upper guide
- 52 -: Upper guide pin
- 53 -: Upper guide slot
- 54 -: Lower guide
- 55 -: Lower guide pin
- 56 -: Lower guide slot
- 57 -: Corrugated shielding part
- 58 -: Spring
- 59 -: Main aperture in upper member
- 60 -: Secondary aperture in upper member
- 61 -: Ridge on upper member
- 62a,b -: Adjacent surface sections
- 63 -: Exposed surface of upper member
- 64 -: Main aperture edge
- 65 -: Main aperture in lower member
- 66 -: Ridge on lower member
- 67a,b -: Adjacent surface sections
- 68 -: Exposed surface of lower member
- 69 -: Main aperture edge
- 70 -: 1^{st} upper member shielding part
- 71 -: 2^{nd} upper member shielding part
- 72 -: Plug
- 73 -: 1^{st} Upper member shielding part section
- 74a,b -: 2^{nd} Upper member shielding part surfaces
- 75 -: 1^{st} Lower member shielding part
- 76 -: 2^{nd} Lower member shielding part
- 77 -: 3^{rd} Lower member shielding part
- 78 -: Clip
- 79 -: 3^{rd} lower member shielding part section
- 80 -: 3^{rd} Gripping device
- 81 -: Upper member
- 82 -: Lower member
- 83 -: 1^{st} End of upper member
- 84 -: 2^{nd} End of upper member
- 85 -: 1^{st} End of lower member
- 86 -: 2^{nd} End of lower member
- 87 -: Bend in upper member
- 88 -: Bend in lower member
- 89 -: Upper guide
- 90 -: Upper guide pin
- 91 -: Upper guide slot
- 92 -: Lower guide
- 93a,b -: Lower guide blocks
- 94 -: Lower guide part
- 95 -: Spring
- 96 -: Main aperture in upper member
- 97 -: Secondary aperture in upper member
- 98 -: Ridge on upper member
- 99a,b -: Adjacent surface sections
- 100 -: Exposed surface of upper member
- 101 -: Main aperture edge
- 102 -: Main aperture in lower member
- 103 -: Ridge on lower member
- 104a,b -: Adjacent surface sections
- 105 -: Exposed surface of lower member
- 106 -: Main aperture edge
- 107 -: 1^{st} Upper member shielding part
- 108 -: 2^{nd} Upper member shielding part
- 109 -: Plug
- 110 -: 2^{nd} Upper member shielding part section
- 111a,b -: 2^{nd} Upper member shielding part surfaces
- 112 -: 1^{st} Lower member shielding part
- 113 -: 2^{nd} Lower member shielding part
- 114 -: Mounting block
- 115a,b -: 2^{nd} Lower member shielding part sections
- 116 -: 2^{nd} Lower member shielding part aperture
- 117a,b -: 2^{nd} Lower member shielding part surface sections
- 118 -: 4^{th} Gripping device
- 119 -: Upper member
- 120 -: Lower member
- 121 -: 1^{st} End of upper member
- 122 -: 2^{nd} End of upper member
- 123 -: 1^{st} End of lower member
- 124 -: 2^{nd} End of lower member
- 125 -: Bend in upper member
- 126 -: Bend in lower member
- 127 -: Upper bracket
- 128 -: Lower bracket
- 129 -: Lower guide
- 130 -: Guide pin
- 131 -: Guide block
- 132 -: Spring
- 133 -: Main aperture in upper member
- 134 -: Secondary aperture in upper member
- 135 -: Ridge on upper member
- 136a,b -: Adjacent surface sections
- 137 -: Exposed surface
- 138 -: Main aperture edge
- 139 -: Main aperture in lower member
- 140 -: Ridge on lower member
- 141a,b -: Adjacent surface sections
- 142 -: Exposed surface
- 143 -: Main aperture edge
- 144 -: 1^{st} Upper member shielding part
- 145 -: 2^{nd} Upper member shielding part
- 146 -: 3^{rd} Upper member shielding part
- 147 -: Plug
- 148a,b -: 3^{rd} Upper member shielding part sections
- 149 -: 1^{st} Lower member shielding part
- 150 -: 2^{nd} Lower member shielding part
- 151a,b -: 2^{nd} Lower member shielding part sections
- 152a,b -: 2^{nd} Lower member shielding part surface sections
- 153 -: 5^{th} Gripping device
- 154 -: Upper member
- 155 -: Lower member
- 156 -: 1^{st} End of upper member
- 157 -: 2^{nd} End of upper member
- 158 -: 1^{st} End of lower member
- 159 -: 2^{nd} End of lower member
- 160 -: Bend in upper member
- 161 -: Bend in lower member
- 162 -: Upper guide
- 163 -: Upper guide pin
- 164 -: Upper guide slot
- 165 -: Lower guide
- 166a,b -: Lower guide blocks
- 167 -: Lower guide part
- 168 -: Spring
- 169 -: Main aperture in upper member
- 170 -: Secondary aperture in upper member
- 171 -: Ridge on upper member
- 172a,b -: Adjacent surface sections
- 173 -: Exposed surface
- 174 -: Main aperture edge
- 175 -: Main aperture in lower member
- 176 -: Ridge on lower member
- 177a,b -: Adjacent surface sections
- 178 -: Exposed surface
- 179 -: Main aperture edge
- 180 -: 1^{st} Upper member shielding part
- 181 -: 2^{nd} Upper member shielding part
- 182 -: Plug
- 183 -: Second upper member shielding part section
- 184a,b -: Second upper member shielding part surfaces
- 185 -: 1^{st} Lower member shielding part
- 186 -: 2^{nd} Lower member shielding part
- 187 -: Mounting block
- 188a,b -: 2^{nd} Lower member shielding part sections
- 189 -: Aperture in 2^{nd} lower member shielding part
- 190a,b -: 2^{nd} Lower member shielding part surface sections

## Claims

1. Device for gripping a workpiece (2) and electrically contacting at least one surface of the workpiece (2), which device comprises:
a first member (9;44;82;120;155) extending between a first end (12;47;85;123;158) and a second end (13;48;86;124;159);
a second member (8;43;81;119;154) extending between a first end (10;45;83;121;156) and a second end (11;46;84;122;157) and movably journalled with respect to the first member (9;44;82;120;155) to allow the workpiece (2) to be inserted between the respective first ends (10,12;45,47;83,85;121,123;156,158) and held between the first and second members (8,9;43,44;81,82;119,120;154,155) at respective clamping locations that are closer to the first ends (10,12;45,47;83,85;121,123;156,158) than to the second ends (11,13;46,48;84,86;122,124;157,159) along the extents of the first and second members (8,9;43,44;81,82;119,120;154,155),
wherein each of the first and second members (8,9;43,44;81,82;119,120;154,155) comprises at least a section located between the clamping location and the second end (11,13;46,48;84,86;122,124;157,159) along the extent of that member (8,9;43,44;81,82;119,120;154,155), and
wherein at least one of the first and second members (8,9;43,44;81,82;119,120;154,155) is electrically conducting and provided with a contact region at the clamping location for contacting a surface of the workpiece (2), the contact region comprising at least one exposed surface (25,30;63,68;100,105;137;142;173,178) facing towards the other of the first and second members (8,9;43,44;81,82;119,120;154,155); and
at least one shielding part (17,32-35,38-40;70-72,75-77,78;93a,b,94,107-109,112-114;131,14 4-147,149,150;166a,b,167,180-182,185-187), obtainable independently of the first and second members (8,9;43,44;81,82;119,120;154,155) and made of material with a lower electrical conductivity than electrically conducting material of the electrically conducting members) (8,9;43,44;81,82;119,120;154,155), **characterised in that**
at least the section located between the clamping location and the second end (11,13;46,48;84,86;122,124;157,159) of each of those of the first and second members (8,9;43,44;81,82;119,120;154,155) that are electrically conducting is shielded on a side of that member (8,9;43,44;81,82;119,120;154,155) that faces the other of the first and second members (8,9;43,44;81,82;119,120;154,155) by at least one of the shielding parts (17,32-35,38-40;70-72,75-78;93a,b,94,107-109,112-114;131,144-147,149,150;166a,b,167,180-182,185-187), and
shielding parts (17,33,34,39,40;71,77,78;93a,b,94,108,113;131,145,146,150; 166a,b,167,181,186) shielding that section of any of the first and second members (8,9;43,44;81,82;119,120;154,155) on a side of that member that faces the other of the first and second members (8,9;43,44;81,82;119,120;154,155) border a gap through which liquid can flow between the first and second members (8,9;43,44;81,82;119,120;154,155).

2. Device according to claim 1,
wherein the shielded section located between the clamping location and the second end (11,13;46,48;84,86;122,124;157,159) extends to the clamping location.

3. Device according to claim 1 or 2,
wherein at least one of the first and second members (8,9;43,44;81,82;119,120;154,155) has a basic shape in the form of a strip.

4. Device according to any one of the preceding claims,
wherein the first and second members (8,9;43,44;81,82;119,120;154,155) are each provided with a bend (14,15;49,50;87,88;125,126;160,161) at a position closer to the first end than to the second end (11,13;46,48;84,86;122,124;157,159) along their extent.

5. Device according to any one of the preceding claims,
wherein at least one of the first and second members (8,9;43,44;81,82;119,120;154,155) is provided with a liquid-permeable window (21,27;59,65;96,102;133,139;169,175) through that member (8,9;43,44;81,82;119,120;154,155) in the section located between the clamping location and the second end (11,13;46,48;84,86;122,124;157,159) along the extent of that member (8,9;43,44;81,82;119,120;154,155).

6. Device according to claim 4 and 5,
wherein at least part of the window (21,27;59,65;96,102;133,139;169,175) is located between the bend (14,15;49,50;87,88;125,126;160,161) and the clamping location.

7. Device according to claim 5 or 6,
wherein the window is formed by an aperture (21,27;59,65;96,102;133,139;169,175) through the member (8,9;43,44;81,82;119,120;154,155),
wherein at least one shielding part (17,34,39;70,77;108,113;131,146,150;181,186) comprises a section (37,36a,b,41;73,79;110,115a,b;148a,b,151a,b;183,188a,b) extending into the aperture (21,27;59,65;96,102;133,139;169,175) at an edge (26,31;64,69;101,106;138,143;174,174) of the aperture, and
the section(s) (37,36a,b,41;73,79;110,115a,b;148a,b,151a,b;183,188a,b) extending into the aperture (21,27;59,65;96,102;133,139;169,175) cover the edge (26,31;64,69;101,106;138,143;174,174) of the aperture (21,27;59,65;96,102;133,139;169,175).

8. Device according to any one of the preceding claims,
wherein the first and second members (8,9;43,44;81,82;119,120;154,155) are interconnected by at least one guide (16,17,18,19;51,54;89,92;127,128,129;162,165) movably journalling the first and second members (8,9;43,44;81,82;119,120;154,155) with respect to each other, e.g. a linear guide.

9. Device according to any one of the preceding claims,
wherein the at least one exposed surface (25,30;63,68;100,105;137;142;173,178) is formed at a distal end of a respective raised part (23,28;61,66;98,103;135,140;171,176) projecting with respect to adjacent surface sections (24a,b,29a,b;62a,b,67a,b;99a,b,104a,b;136a,b,141a,b;172a,b,177 a,b) of the electrically conducting member (8,9;43,44;81,82;119,120;154,155).

10. Device according to claim 9,
wherein at least one of the shielding parts shields the adjacent surface sections (24a,b,29a,b;62a,b,67a,b;99a,b,104a,b;136a,b,141a,b;172a,b,177 a,b).

11. Device according to claim 10,
wherein the raised part(s) (23,28;61,66;98,103;135,140;171,176) protrude with respect to at least the shielding part(s) extending from the raised part(s) (23,28;61,66;98,103;135,140;171,176) towards the second end (11,13;46,48;84,86;122,124;157,159).

12. Device according to any one of claims 9-11,
wherein any surface section (74a,b;111a,b,117a,b;152a,b;184a,b,190a,b) defined by those shielding parts (34,39;71,77;108,113;146,150;181,186) forming a section from a base of the raised part (23,28;61,66;98,103;135,140;171,176) towards the second end (11,13;46,48;84,86;122,124;157,159) along the extent of at least one of those of the first and second members (8,9;43,44;81,82;119,120;154,155) that are electrically conducting that faces in a direction of the other of the first and second members (8,9;43,44;81,82;119,120;154,155) is set back with respect to the exposed surface (25,30;63,68;100,105;137;142;173,178) formed at the distal end of the raised part (23,28;61,66;98,103;135,140;171,176).

13. Conveying system for conveying a workpiece (2) through an apparatus (1) for electrochemical processing, comprising:
at least one, e.g. a plurality, of devices (7;42;80;118;153) according to any one of the preceding claims; and
a driving device for driving movement of the at least one device (7;42;80;118;153) along a path through the apparatus (1) in a state in which the device (7;42;80;118;153) holds the workpiece (2),
wherein the system is arranged to cause relative movement of at least sections of the first and second members (8,9;43,44;81,82;119,120;154,155) comprising the clamping locations at a start of the path and at an end of the path to grip and release the workpiece (2) respectively.

14. Apparatus for electrochemical surface treatment of workpieces (2), comprising:
a conveying system (4) according to claim 13;
at least one processing bath (3) comprising at least one counterelectrode; and
at least one current supply connected to at least one of those of the first and second members (8,9;43,44;81,82;119,120;154,155) of the clamping devices that are electrically conducting to establish a voltage differential between the connected member(s) (8,9;43,44;81,82;119,120;154,155) and at least one of the at least one counter-electrodes.

15. Method of manufacturing a device (7;42;80;118;153) according to any one of claims 1-12,
wherein at least one of the shielding
parts (32-34,38-40;70,71,75-78;107,108,112,113;144-146,149,150;180, 181,185,186) is obtained by additive manufacturing.
